# EUROPÄISCHE PATENTANMELDUNG

(11) **EP 4 845 066 A1**
(43) Veröffentlichungstag der Anmeldung: **25.11.2026**
(21) Anmeldenummer: 26180754.9
(22) Anmeldetag: 22.05.2026
(51) Int. Cl.: H04L 1/00

(54) **NETZKNOTEN UND ENTSPRECHENDES VERFAHREN**

(30) Priorität: 22.05.2025 EP 25178360
(71) Anmelder: Fraunhofer-Gesellschaft zur Förderung der angewandten Forschung e.V., 80686 München (DE)
(72) Erfinder: HUPP, Jürgen, 91058 Erlangen (DE); BURKHART, Frank, 91058 Erlangen (DE); HAALA, Oliver, 91058 Erlangen (DE); FROTZSCHER, Andreas, 01157 Dresden (DE)
(74) Vertreter: Pfitzner, Hannes

(57) **Zusammenfassung**

Ein Ausführungsbeispiel schafft einen Netzknoten, insbesondere eine Subnetzeinheit (SNE), mit einem Transceiver, der ausgebildet ist:
erste Downlinkdaten (A) in einem oder mehreren ersten Zeitschlitzen zu empfangen; und
erste Uplinkdaten (a) in einem oder mehreren zweiten Zeitschlitzen zu senden.

Hier werden die ersten Uplinkdaten als codierte Daten (A+a) gesendet, die mit den ersten Downlinkdaten (A) codiert sind, oder als erweiterte Daten (a mit A') umfassend die ersten Uplinkdaten (a) sowie eine von den ersten Downlinkdaten abgeleiteten Information (A') gesendet werden.

## Beschreibung

Ausführungsbeispiele der vorliegenden Erfindung beziehen sich auf einen Netzknoten, insbesondere eine Subnetzeinheit (SNE). Weitere Ausführungsbeispiele beziehen sich auf eine Basisstation. Wiederum weitere Ausführungsbeispiele beziehen sich auf ein Subnetzwerk umfassend zumindest eine Subnetzeinheit oder mehrere Subnetzeinheiten in unterschiedlichen Varianten, ggf. in Kombination mit einer Basisstation. Weitere Ausführungsbeispiele schaffen ein Verfahren zum Betreiben eines Netzknotens und ein entsprechendes Computerprogramm. Bevorzugte Ausführungsbeispiele beziehen sich auf ein Verfahren zur opportunistischen network-coded Kooperationen mit URLLC bzw. HRLLC Funksysteme.

Es werden an Ultra Reliable and Low Latency Communication (URLLC) bzw. Hyper Reliable and Low Latency Communication (HRLLC) Funksysteme, insbesondere in industriellen Anwendungen mit schnellen Reaktionszeiten oder hohen Sicherheits- bzw. Verfügbarkeitsvorgaben, hohe Anforderungen hinsichtlich Paketverlustrate, Datenrate oder Latenz bei der (z.B. bidirektionalen) Übertragung gestellt.

Zwischen den sechs SNEs in der Reichweite von einem high-capability device (HC, entspricht Basisstation) gibt es keinen schwachen Link, so dass von ungestörter Kommunikation auszugehen ist. Beispiele für SNEs 30 sind Sensoren oder Aktoren in beweglichen Szenarien, mobile Roboter oder Sicherheitseinrichtungen.

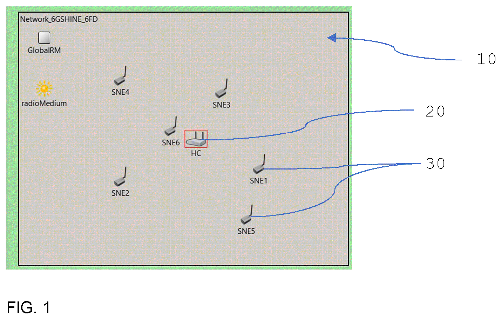

Fig. 1 zeigt ein Netzwerk oder Subnetzwerk 10 mit einer Basisstation 20 und einer Mehrzahl von Netzknoten 30, die auch als Subnetzeinheiten bezeichnet werden. Die Basisstation 20 kann auch als high-capability device, HC, bezeichnet werden. Die Subnetzeinheiten 30 können beispielsweise als user equipment oder field devices realisiert sein. Die Subnetzeinheiten 30 weisen beispielsweise einen Transceiver auf, z. B. Uplink und/oder Downlink, und sind beispielsweise mit einem integrierten Sensor oder integrierten Aktor ausgestattet.

Sowohl für einen Uplink als auch für einen Downlink wird die Ressourcenbelegung im System entsprechend ausgelegt. Beispielsweise kann jedem SNE 20 ein Empfangsslot zugeordnet werden. Je nachdem wie die Ressourcen zugewiesen sind, wird die Übertragungseffizienz, die Übertragungssicherheit (Redundanz), Reichweite, Stromverbrauch und/oder Übertragungsrate beeinflusst. In diesem Zusammenhang ist auch der Begriff network-coded cooperation (NCC) bzw. netzwerkcodierte Kooperation zu erwähnen, der Konzepte zur fehlerkorrigierenden Codierung und/oder kooperativen Übertragung vereint, um die Effizienz und Zuverlässigkeit in Funknetzwerken zu verbessern. Gerade für NCC Cluster besteht der Bedarf eines solchen Ansatzes.

Aufgabe der vorliegenden Erfindung ist das Konzept zur Ressourcenbelegung für Netzknoten zu schaffen, das hinsichtlich Ressourcennutzung und Zuverlässigkeit optimiert ist.

Die Aufgabe wird durch den Gegenstand der unabhängigen Patentansprüche gelöst.

Die Ausführungsbeispiele der vorliegenden Erfindung schaffen einen Netzknoten, insbesondere eine Subnetzeinheit, SNE, mit einem Transceiver, der ausgebildet ist, erste Downlink-Daten in einem oder mehreren ersten Zeitschlitzen zu empfangen und erste Uplink-Daten in einem oder mehreren zweiten Zeitschlitzen zu senden. Die ersten Uplink-Daten werden als codierte Daten gesendet, die mit den ersten Downlink-Daten codiert sind, oder als erweiterte Daten umfassend die ersten Uplink-Daten sowie eine von den ersten Downlink-Daten abgeleitete Information.

D. h., in entsprechenden Ausführungsbeispielen, wenn die Downlink-Daten A sind und die Uplink-Daten a sind, wird entweder A+a oder a mit a' gesendet, wobei a' die abgeleitete Information ist. Dieser Aspekt hat eine Fokussierung auf die Codierung im zweiten Zeitschlitz, d. h., beim Senden. Kern der Erfindung liegt also darin, dass durch eine Subnetzeinheit empfangene Downlink-Daten nicht isoliert verarbeitet, sondern diese bei der anschließenden Uplink-Übertragung gezielt weiterverwendet.

Hierzu werden die Uplink-Daten entweder gemeinsam mit den zuvor empfangenen Downlink-Daten codiert übertragen oder um aus den Downlink-Daten abgeleitete Zusatzinformationen erweitert übertragen. Dadurch entsteht eine gekoppelte Downlink-Uplink-Kommunikation, bei der vorhandene Informationen mehrfach genutzt werden, um die Datenübertragung effizienter und ressourcenschonender zu gestalten. Ein wesentlicher Vorteil der Lehre liegt darin, dass die Uplink-Übertragung effizienter gestaltet werden kann, weil die bereits empfangenen Downlink-Daten bei der Bildung der Uplink-Daten mitgenutzt werden. Hierdurch reduziert sich die Anzahl der separat zu übertragenden Informationen erheblich, was die Übertragungseffizienz verbessert.

Ein weiteres Ausführungsbeispiel schafft einen Netzknoten, wobei die ersten Uplink-Daten als uncodierte Daten anstatt der codierten Daten A+a oder anstatt der erweiterten Daten a mit a' gesendet werden, wenn keine ersten Downlink-Daten A empfangen wurden, z. B., wenn eine Störung vorliegt. So kann dennoch effizient der Uplink sichergestellt werden, ohne dass der Netzknoten auf den Downlink wartet.

Entsprechend den weiteren Ausführungsbeispielen ist ein Codiervektor der gesendeten uncodierten oder codierten Daten oder erweiterten Daten vorhanden und wird mitübertragen. Dieser gibt beispielsweise Auskunft über die Zusammensetzung des gesendeten Inhalts. In anderen Worten ausgedrückt heißt das, dass der Codiervektor beschreibt, wie in dem vorliegenden Fall die Daten miteinander codiert sind, z. B., A + b. Beispielsweise können auch unterschiedliche Gewichtungen je Daten vorgesehen sein. Der Codiervektor kann sich entsprechend Ausführungsbeispielen auch dahingehend unterscheiden, ob ein Datenpaket, z. B., ein Downlink-Paket weitergesendet wird oder nicht. So kann der Transceiver entsprechend weiteren Ausführungsbeispielen im Prinzip ausgebildet sein, in einem oder mehreren zweiten Zeitschlitzen Daten, beispielsweise von einem oder mehreren weiteren Netzknoten, zu empfangen, die entweder in einem nicht gestörten Fall codierte Daten (B+b) mit zweiten Uplink-Daten oder zweiten Downlink-Daten oder erweiterten Daten (b mit B') enthalten oder die in einem gestörten Fall nur zweite Uplink-Daten (b) enthalten.

Ein weiteres Ausführungsbeispiel schafft ein Konzept zum Erkennen der Störung. Der Transceiver ist entsprechend Ausführungsbeispielen ausgebildet, das Vorliegen des gestörten Falls, insbesondere eines weiteren Netzknotens, anhand des Empfangs des zweiten Uplink-Pakets und die zweiten Downlink-Daten oder anhand der erweiterten Daten zu erkennen. So kann er vorteilhafterweise die empfangenen Daten entsprechend unter Berücksichtigung der erkannten Falls (gestörten / ungestörter Fall) decodieren.

Ein weiteres Ausführungsbeispiel ermöglicht die Anpassung der Daten für einen dritten Zeitschlitz. Der Transceiver ist ausgebildet bei Vorliegen des gestörten Falls in einem oder mehreren dritten Zeitschlitzen die zweiten Uplink-Daten und die zweiten Downlink-Daten oder Daten, die die zweiten Uplink-Daten codiert mit den zweiten Downlink-Daten enthalten, zu versenden. Insofern ist vorteilhafterweise dieses Konzept auf weitere Zeitschlitze übertragbar bzw. in weiteren Zeitschlitzen fortführbar.

Das gibt entsprechend weiteren Ausführungsbeispielen die Möglichkeit für weitere Netzknoten in den ersten bzw. zweiten Zeitschlitzen entsprechend mitzuhören. Insofern ist der Transceiver entsprechend Ausführungsbeispielen ausgebildet, um mitzuhören, um in einem oder mehreren ersten Zeitschlitzen die zweiten Downlink-Daten, beispielsweise von einer Basisstation zu empfangen und/oder um mitzuhören, um in einem oder mehreren zweiten Zeitschlitzen die zweiten Uplink-Daten, beispielsweise von einem weiteren Netzknoten zu empfangen.

Ein weiteres Ausführungsbeispiel bezieht sich beispielsweise auf einen weiteren Netzknoten bzw. ein Netzwerk. D. h., dass entsprechend Ausführungsbeispielen der oben erläuterte Netzknoten in einem Netzwerk oder Subnetzwerk, das weitere Netzknoten und eine Basisstation umfasst, kommuniziert. Entsprechend den Ausführungsbeispielen können die codierten Daten an die weiteren Netzknoten oder die Basisstation in einem oder mehreren zweiten Zeitschlitzen gesendet werden, um einen Uplink an die Basisstation durchzuführen und den anderen Netzknoten zu signalisieren, dass eine Weiterleitung benötigt ist. Entsprechend weiteren Ausführungsbeispielen werden zweite Uplink-Daten und zweite Downlink-Daten oder Daten, die die zweiten Uplink-Daten codiert mit den zweiten Downlink-Daten enthalten, in einem oder mehreren dritten Zeitschlitzen an weitere Netzknoten gesendet, um eine Weiterleitung zu ermöglichen. Diese drei Ausführungsbeispiele zeigen die vorteilhafterweise vorliegende Interaktion zwischen dem oben erläuterten Netzknoten und weiteren Netzknoten.

Entsprechend weiteren Ausführungsbeispielen ist es auch möglich, ohne Anpassung der Daten für dritte Zeitschlitze eine Übermittlung durchzuführen. Entsprechend Ausführungsbeispielen ist der Transceiver ausgebildet, in einem oder mehreren dritten Zeitschlitzen Uplink-Daten und Downlink-Daten gemäß vordefinierten Konfigurationen (Codiervorschrift) in einem nicht gestörten Fall zu versenden. Entsprechend weiteren Ausführungsbeispielen kann der Transceiver ausgebildet sein, anhand der codierten Daten, insbesondere der codierten zweiten Uplink-Daten und/oder zweiten Downlink-Daten, im zweiten Zeitschlitz, z. B. basierend auf Codiervektor, oder anhand einer abgeleiteten Information, insbesondere einer aus den zweiten Downlink-Daten abgeleiteten Information, zu erkennen, ob und/oder wie gut der Netzknoten die Basisstation empfangen hat und/oder wie gut der weitere Netzknoten empfangen werden konnte. Entsprechend weiteren Ausführungsbeispielen kann der Transceiver ausgebildet sein, in einem Hilfebedarf für den weiteren Netzknoten oder die Basisstation zu bestimmen und/oder einen Parameter, der den Hilfebedarf, z. B. des weiteren Netzknotens anzeigt, auszugeben. Entsprechend Ausführungsbeispielen ist der Transceiver ausgebildet, eine Priorität des Hilfebedarfs von weiteren Netzknoten (z. B. abhängig von der Entfernung) zu bestimmen und/oder eine Liste anderer Netzknoten mit Bewertung derer Empfangsverhältnisse und Erreichbarkeit zu übermitteln. Somit kann also vorteilhafterweise der Netzwerktransceiver ausgebildet sein, die Bedarfe der weiteren Netzknoten zu analysieren und gemäß weiteren Ausführungsbeispielen auch die Daten für die weitere Übermittelung, z. B. für die Übermittlung im dritten Zeitschlitz anzupassen.

Entsprechend einem Ausführungsbeispiel ist es denkbar, dass Daten für einen dritten Zeitschlitz angepasst werden. Hier ist der Transceiver entsprechend Ausführungsbeispielen ausgebildet, die Zusammensetzung (C+c oder B+b) der in dem einen oder in den mehreren dritten Zeitschlitzen zu versendenden Daten je nach Hilfebedarf eines anderen Netzknotens und/oder (d. h.) abhängig von dem Vorliegen eines erkannten nicht gestörten Falls eines anderen Netzknotens oder gestörten Falls eines anderen Netzknotens anzupassen. Diese Anpassung kann entsprechend bevorzugten Ausführungsbeispielen genau durch den vorher bestimmten Hilfebedarf und/oder die Bewertung der Empfangsverhältnisse erfolgen.

Ein weiteres Ausführungsbeispiel schafft eine Variante zur Codierung der Daten für den dritten Zeitschlitz. Der Transceiver ist beispielsweise ausgebildet Uplink-Daten und Downlink-Daten gemäß vordefinierten Konfigurationen, d. h. also beispielsweise im Codiervektor, in einem oder mehreren dritten Zeitschlitzen als codierte Daten zu versenden und die zweiten Uplink-Daten und zweiten Downlink-Daten als codierte Daten in einem oder mehreren dritten Zeitschlitzen zu versenden.

Entsprechend den Ausführungsbeispielen gibt die abgeleitete Information (A') oder ein Kordiervektor der codierten Daten (A+a) Auskunft über den erfolgreichen Empfang der ersten Daten und/oder über die Qualität des Empfangs der ersten Downlinkdaten (A), und/oder ein Parameter, der von Qualität des Empfangs der ersten Downlinkdaten (A) abhängt, ist als Gewichtungsfaktor (K) für die codierten Daten (KxA+a) oder Teil der abgeleitete Information (A').

Entsprechend den Ausführungsbeispielen sind die ein oder mehreren ersten Zeitschlitze und die ein oder mehreren zweiten Zeitschlitze oder die ein oder mehreren ersten Zeit-schlitze, die ein oder mehreren zweiten Zeitschlitze und die ein oder mehreren dritten Zeit-schlitze in einem gemeinsamen Frame angeordnet (z.B. 3GPP 5G/6G, ETSI DECT NR+), oder die ein oder mehreren ersten Zeitschlitze und die ein oder mehreren zweiten Zeit-schlitze oder die ein oder mehreren ersten Zeitschlitze, die ein oder mehreren zweiten Zeit-schlitze und die ein oder mehreren dritten Zeitschlitze sind gemäß einer definierten Reihen-folge angeordnet (z.B. WiFi).

Entsprechend den Ausführungsbeispielen ist der Transceiver ausgebildet, in einem jeweiligen ersten und/oder in einem jeweiligen zweiten 20 und/oder in einem jeweiligen dritten Zeitschlitz nur dann mitzuhören, wenn in diesem jeweiligen ersten oder jeweiligen zweiten oder jeweiligen dritten Zeitschlitz der Empfang von Daten oder von codierten Daten von weiteren Netzknoten oder einer Basisstation für einen weiteren Netzknoten zu erwarten ist, die zusammen mit dem Netzknoten einem definierten Cluster zugeordnet sind.

Dieses Ausführungsbeispiel bezieht sich vorteilhafterweise auf die Clusterung, bei der einzelne Netzknoten zu einem definierten Cluster zugeordnet werden, sodass nicht jeder Netzknoten zu jedem Zeitschlitz mithört, was die Energieeffizienz weiter erhöht.

Entsprechend den Ausführungsbeispielen ordnet die eine Konfiguration jeweils erste Zeitschlitze und/oder jeweils zweite Zeitschlitze und jeweils dritte Zeitschlitze einzelnen Netzknoten zu und für den Netzknoten anhand der Konfiguration ist eine Erwartung für den Empfang ableitbar.

Entsprechend den Ausführungsbeispielen kennt der Netzknoten anhand einer Clusterkonfiguration und/oder einem Clusterlevel mit unterschiedlichen Clusterkonfigurationen die weiteren Netzknoten im definierten Cluster oder hat Kenntnis über Zuordnung der jeweiligen Zeitschlitz zu den jeweiligen Clustern.

Entsprechend den Ausführungsbeispielen clustert eine Konfiguration mehrere Netzknoten 5 in einem Netzwerk oder Subnetze zu einem Cluster oder ordnet jeweilige Zeitschlitze zu den jeweiligen Clustern zu oder eine weitere Einheit, insbesondere eine Basisstation, clustert mehrere Netzknoten zu einem Cluster oder zu mehreren Clustern mit unterschiedlicher Größe für unterschiedliche Clusterlevel.

Ein weiteres Ausführungsbeispiel schafft eine dynamische Clusterung.

Entsprechend den Ausführungsbeispielen sind innerhalb eines Netzwerks oder Subnetzes Cluster gemäß einer dynamischen Clusterung mitunterschiedlichen Clusterkonfigurationen und unterschiedlichen Clusterleveln vorgesehen. Entsprechend den Ausführungsbeispielen variiert sich je nach Clusterlevel die Anzahl der geclusterten Netzknoten variiert.

Entsprechend den Ausführungsbeispielen ist der Transceiver ausgebildet, ein Clusterlevel anzupassen oder auszuwählen in Abhängigkeit von einem Erkennen von einem oder mehreren nicht gestörten Fällen oder einem oder mehreren gestörten Fällen.

Entsprechend den Ausführungsbeispielen wird eine Zugehörigkeit der Netzknoten zu einem oder mehreren Clustern abhängig von einer Auswertung von einem oder mehreren gestörten Fällen oder einem oder mehreren nicht gestörten Fällen und/oder einer Auswertung von Empfangsqualitätsinformationen definiert; oder wobei eine Zugehörigkeit der Netzknoten zu einem oder mehreren Clustern abhängig von einer Auswertung von einem oder mehreren gestörten Fällen oder einem oder mehreren nicht gestörten Fällen und/oder einer Auswertung von Signalstärken wird definiert, wobei die Clusterkonfiguration durch eine Basisstation erfolgt.

Entsprechend einem weiteren Ausführungsbeispiel wird ein weiterer Netzknoten, insbesondere ein Subnetzknoten in einem Transceiver geschaffen, der ausgebildet ist:
Ein weiteres Ausführungsbeispiel schaffte einen weiteren Netzknoten, insbesondere eine Subnetzeinheit (SNE), mit einem Transceiver, der ausgebildet ist, erste Downlinkdaten und erste Uplinkdaten in einem oder mehreren ersten Zeitschlitzen zu empfangen; und codierte Daten, die die ersten Uplinkdaten codiert mit den ersten Downlinkdaten oder codiert mit einer von den ersten Downlinkdaten abgeleiteten Information codiert sind in einem oder mehreren zweiten Zeitschlitzen zu empfangen.

Kern dieser Ausgestaltung liegt darin, dass ein Netzknoten codierte kombinierte Daten zunächst auswählt und anhand dieser Daten autonom erkennt, ob ein gestörter Übertragungsfall vorliegt. Für den Fall, dass ein solcher Fehlerfall identifiziert ist, erfolgt eine erneute Übertragung der ursprünglichen Downlink- und/oder Uplink-Daten. Hierdurch ist der Netzknoten also ausgebildet zur codierten gekoppelten Datenübertragung mit einer Fehlererkennung anhand dieser codierten Daten. In Abhängigkeit von der Fehlererkennung erfolgt eine ergebnisgesteuerte adaptive Wiederholung der ursprünglichen Daten. Hierdurch wird eine effiziente und zugleich robuste Kommunikation sichergestellt, bei welcher Übertragungsstörungen oder fehlerhafte Decodierungen frühzeitig erkannt und gezielt kompensiert werden können.

Diese Entscheidung erfolgt entsprechend Ausführungsbeispielen dezentral durch das SNE. Die Anpassung des Codingvectors braucht keine Schleife über eine zentrale Einheit sowie die Basisstation. Die Anpassung des Codier-Vektors benötigt keine Änderung der Ressourcen-Belegung, der Sende-Slot wird wie vorgesehen genutzt, es ändert sich nur der Inhalt des Pakets.

### Netzknote

Ein weiteres Ausführungsbeispiel schafft einen Netzknoten, insbesondere eine Subnetzeinheit (SNE), mit einem Transceiver, der ausgebildet ist, erste Uplinkdaten (a) in einem oder mehreren ersten Zeitschlitzen zu senden. Die ersten Downlink-Daten werden als codierte Daten (A+a) gesendet, die mit den ersten Uplink-Daten (a) codiert sind, oder als erweiterte Daten umfassend die ersten Downlink-Daten (A) sowie eine von den ersten Uplink-Daten abgeleitete Information (a') gesendet werden.

Kern hierbei ist, dass zuvor gesendete Uplink-Daten bei einer nachfolgenden Downlink-Übertragung gezielt wiederverwendet werden. Ausführungsbeispiele dieses Aspekts schaffen also eine gekoppelte Uplink-/Downlink-Kommunikation, bei die Informationen aus einer vorherigen Übertragungsrichtung in der Gegenrichtung erneut genutzt werden, um die Kommunikation effizienter, ressourcenschonender und robuster zu gestalten.

Ein weiteres Ausführungsbeispiel schafft eine Basisstation, insbesondere HC-Einheit, die ausgebildet ist, erste und/oder zweite Downlinkdaten in einem oder mehreren ersten Zeit-schlitzen zu senden und eine oder mehrere Netzknoten zu einem oder mehreren Clustern zu clustern.

Gemäß einem weiteren Ausführungsbeispiel wird ein Subnetzwerk geschaffen, das umfasst zumindest eine Subnetzeinheit und/oder eine weitere Subnetzeinheit und/oder eine Basisstation.

Ein weiteres Ausführungsbeispiel schafft ein Verfahren zum Betreiben eines Netzknotens mit folgenden Schritten:
Ein weiteres Ausführungsbeispiel schafft Verfahren zum Betreiben eines Netzknotens durch Empfangen von ersten Downlinkdaten in einem oder mehreren ersten Zeitschlitzen, und Senden von ersten Uplinkdaten in einem oder mehreren zweiten Zeitschlitzen, wobei die ersten Uplinkdaten als codierte Daten (A+a) gesendet werden, die mit den ersten Downlinkdaten (A) codiert sind, oder als erweiterte Daten umfassend die ersten Uplinkdaten (a) sowie eine von den ersten Downlinkdaten abgeleiteten Information (A') gesendet werden.

Die Verfahren wirken bereits innerhalb eines Frames, was insbesondere für Echtzeit-Kommunikation entscheidend sein kann, da hier einzelne oder sequentiell mehrfache Paketverluste einen Störungsfall auslösen. Die Verfahren können Paketverluste vorausschauend vermeiden, da eine NCC-Anpassung durch Analyse der empfangenen Coded Packets bereits erfolgen kann, BEVOR ein Paketverlust auftritt.

Gemäß weiteren Ausführungsbeispielen kann das Verfahren auch computerimplementiert sein, d. h., ein Ausführungsbeispiel schafft ein Computerprogramm mit einem Programm zur Durchführung des Verfahren, wenn das Programm auf einem Transceiver ausgeführt wird.

Weiterbildungen sind in den Unteransprüchen definiert. Ausführungsbeispiele der vorliegenden Erfindung werden anhand der nachfolgenden Zeichnungen erläutert, es zeigen:
- Fig. 1: ein beispielhaftes Funksystem bestehend aus einem zentralen Funkknoten (HC oder auch BS) und sechs Funkknoten als Endgeräte (SNE oder UE oder FD) zur Erläuterung des Hintergrunds der Ausführungsbeispiele;
- Fig. 2a-c: schematische Diagramme beispielhafter Resourcenbelegungsmatrix zur Erläuterung des Hintergrunds der Ausführungsbeispiele;
- Fig. 3: ein schematisches Diagramm zur cooperativen communication CC zur Erläuterung von Ausführungsbeispielen (Quelle: S. Tedik Ba 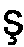 aran, G. Karabulut Kurt, M. Uysal and İ. Altunba 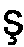 , "A tutorial on network coded cooperation," in IEEE Communications Surveys & Tutorials, vol. 18, no. 4, pp. 2970-2990, Fourthquarter 2016, doi: 10.1109/COMST.2016.2562027.);
- Fig. 4: ein schematisches Diagramm zum network coded cooperation NCC zur Erläuterung von Ausführungsbeispielen (Quelle: S. Tedik Ba 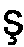 aran, G. Karabulut Kurt, M. Uysal and İ. Altunba 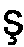 , "A tutorial on network coded cooperation," in IEEE Communications Surveys & Tutorials, vol. 18, no. 4, pp. 2970-2990, Fourthquarter 2016, doi: 10.1109/COMST.2016.2562027.);
- Fig. 5a, b: beispielhafte Berechnung von codierten Paketen anhand von n=2 Source-Paketen einschließlich vorangestellter Signalisierung der Codierkoeffizienten zur Erläuterung von Ausführungsbeispielen;
- Fig. 6: ein schematisches Diagramm zur Illustration von XOR-CoW zur Erläuterung von Ausführungsbeispielen (Quelle: V. N. Swamy, P. Rigge, G. Ranade, A. Sahai and B. Nikolić, "Network coding for high-reliability low-latency wireless control," 2016 IEEE Wireless Communications and Networking Conference, Doha, Qatar, 2016, pp. 1-7, doi: 10.1109/WCNC.2016.7564660);
- Fig. 7a: ein schematisches Diagramm einer beispielhafte NCC-Ressourcenbelegung;
- Fig. 7b: ein schematisches Diagramm einer beispielhafte opportunistischen NCC-Ressourcenbelegung gemäß Ausführungsbeispielen;
- Fig. 8: ein schematisches Diagramm zur Illustration von beispielhafter Störung von Übertragungspfaden durch Hindernisse zur Erläuterung von Ausführungsbeispielen;
- Fig. 9: ein schematisches Diagramm zur Illustration Verbesserungen bzgl. Übertragungsfehlerraten beim Einsatz von Network Coded Cooperation in Subnetzwerken gemäß Ausführungsbeispielen;
- Fig. 10a/b: schematische Diagramme zur Illustration von beispielhafte Ressourcenbelegung bei 2 Clustern bestehend aus jeweils 3 SNE gemäß Ausführungsbeispielen;
- Fig. 11: ein schematisches Diagramm von beispielhaften Resourcenbelegungen bei 3 Clustern bestehend aus jeweils 2 SNE gemäß Ausführungsbeispielen;
- Fig. 12a: eine schematische Übersicht über die notwendigen Ressourcen für verschiedene Verfahren zur Erläuterung von Ausführungsbeispielen; und
- Fig. 12b-12f: schematische Diagramme zur Illustration von KPIs und Simulationsergebnissen für Paketverlustrate (z.B. für n-Neuübertragung mit und ohne Hindernisse, für statische NCC und zwei Hindernisse, für opportunistische NCC und 2 Hindernisse) zur Erläuterung von Ausführungsbeispielen.

Nachfolgend werden Ausführungsbeispiele unter Bezugnahme auf die Figuren erläutert. Hierbei sind gleiche Bezugszeichen für gleiche Elemente und Strukturen versehen, die vergleichbar sind, sodass deren Beschreibung aufeinander anwendbar bzw. austauschbar ist.

Bevor Ausführungsbeispiele der vorliegenden Erfindung erläutert werden, wird der Hintergrund, in welchem sich die Erfindung abspielt, weiter erläutert.

Wie in Fig. 1 dargestellt, können unterschiedliche Netzknoten mit unterschiedlichen Übertragungsverfahren miteinander kommunizieren. Mögliche eingesetzte Verfahren sind time division multiplexing, d. h., klassische deterministische Zeit-Multiplex-Verfahren.

Um ein deterministisches Zeitverhalten bei der Funkübertragung zu realisieren, werden üblicherweise Scheduling-Verfahren oder Zeitmultiplex-Verfahren (Time Division Multiple Access TDMA und/oder Time Division Duplex TDD) eingesetzt. Im Falle einer fehlerfreien Übertragung kann dies zu einer deterministischen Latenz bzw. Zykluszeit führen.

Für die zyklische Übertragung eines Datenpakets innerhalb eines Zeitrahmens (Frame) werden ein periodischer Zeitbereich (Slot) sowie ein Frequenzkanal (Channel) benötigt. Diese Übertragung belegt damit einen so genannten Resource Block in der Belegungsmatrix (Resource Grid) des Gesamtsystems.

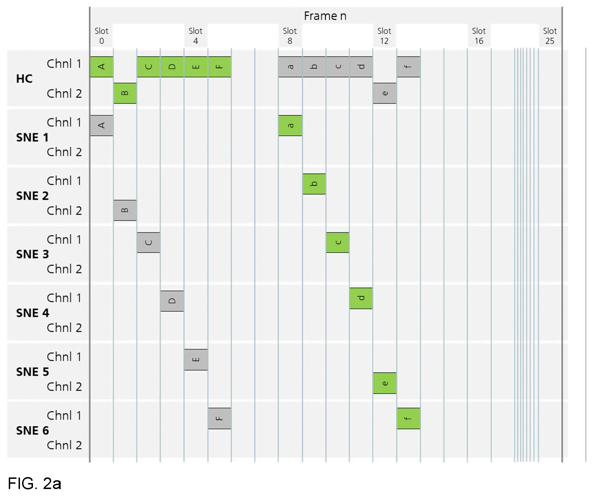

Fig. 2a zeigt eine beispielhafte Ressourcenbelegungsmatrix für eine "Single-Transmission" (Einzelübertragung). Es stehen pro Übertragungsframe mehrere Slots sowie 2 Funkkanäle zur Verfügung. Auf der X-Achse sind die Slots, auf der Y-Achse die unterschiedlichen Netzknoten SNEs mit jeweils zwei channels (Kanälen) aufgezeichnet. Nomenklatur:
A: von HC zu SNE1 (B entsprechend zu SNE2 usw.) und
a: von SNE1 zu HC

Die Übertragung erfolgt über einen beliebigen verfügbaren Kanal. Es sei angemerkt, dass in der Grafik diejenigen Ressourcen, die schraffiert (/grau) dargestellt sind, einem Empfangsvorgang (Empfangen oder RX) entsprechen, wären die anderen (/grünen) Felder einem Sendevorgang (Senden oder TX) entsprechen. Beispielsweise sendet das HC im Slot0/Channel 1 ein Paket "A" aus (downlink), welches für SNE1 bestimmt ist und demnach belegt SNE1 dafür einen korrespondierenden Empfangsslot. Im Slot 8 sendet das SNE1 auf Channel 1 ein Paket "a" aus (uplink), welches für das HC bestimmt ist und demnach belegt das HC dafür einen korrespondierenden Empfangsslot.

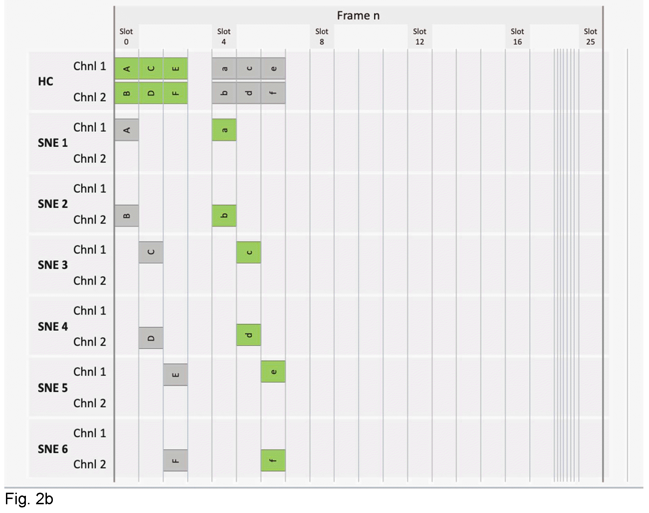

Fig. 2b zeigt eine beispielhafte Ressourcenbelegungsmatrix für eine Einzelübertragung, hier eine Basis-Einzelübertragung, wobei Multilink parallele Übertragungen über mehrere Kanäle ermöglicht und dadurch Zeit spart.

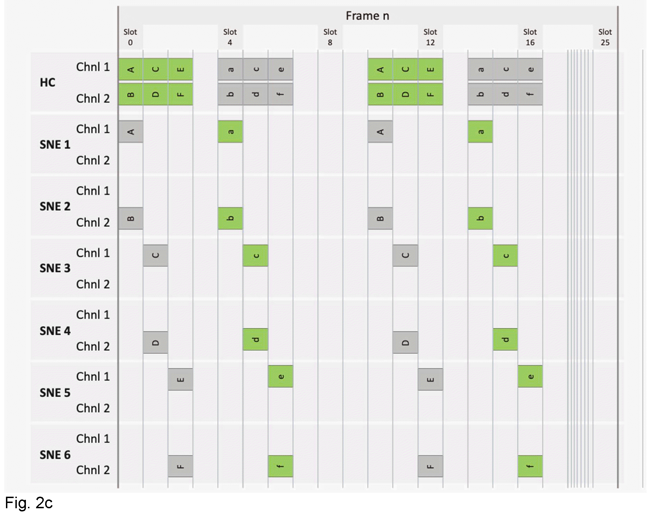

Fig. 2c zeigt eine beispielhafte Ressourcenbelegungsmatrix für einen Retransmission / Neuübertragung. Jedes Paket wird r-mal gesendet.

Bei einer Störung der Übertragung müssen Maßnahmen zur Fehlervermeidung ergriffen werden. Diese Maßnahmen dürfen die Zeitanforderungen für die Übertragung allerdings nicht verletzen, da äußere Steuerungssysteme ansonsten auf die Übertragungsstörung reagieren, beispielsweise mit einem Notbetrieb oder einer Abschaltung der Maschine.

Die Maßnahmen zur Fehlervermeidung erfolgen üblicherweise auf verschiedenen Wegen:
- Kanalcodierung zur Verbesserung eines einzelnen Links
- Antennendiversität, zur Ausnutzung mehrerer Übertragungspfade bei Mehrwegeausbreitung
- Mehrfache Aussendung des gleichen Pakets (n-Retransmission) oder ARQ-/HARQ-Verfahren mit einer angeforderten Paketwiederholung innerhalb der Zykluszeit.
- Relaying und kooperative Verfahren (Cooperative Communication CC), also Paketweiterleitung durch andere Funkknoten als weiterleitender Zwischenknoten. Bei Übertragung über diesen Zwischenknoten ergibt sich eine Erhöhung der Pfadredundanz (Erhöhung der Diversity Order).

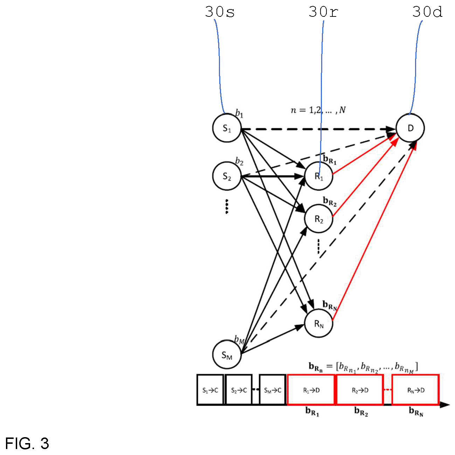

Fig. 3 zeigt ein kooperatives Kommunikationskonzept, bei welchem von mehreren Netzknoten 30S (Sendeknoten) mehrere Datenpakete an zumindest einen Empfängerknoten 30R gesendet werden. Dazwischen befinden sich eine Mehrzahl von Relayknoten 30R, die über kooperative Kommunikation die Datenpakete weiterleiten können. Vor den einzelnen Netzknoten 30R sind die entsprechenden Weiterleitungsdatenpakete in Fig. 3 dargestellt. Kooperative Kommunikation bedeutet, dass der Relayknoten 30R, auch Router genannt, empfangene Pakete weiterleiten.

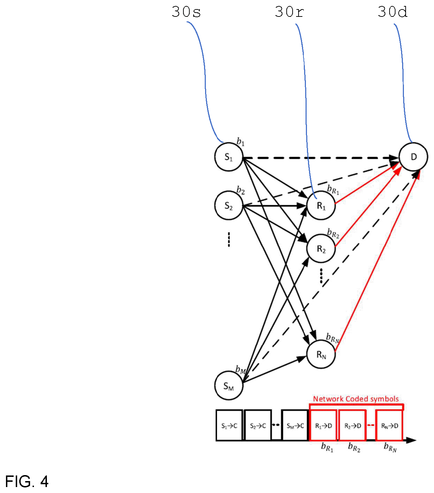

Fig. 4 zeigt einen Einsatz von network coding bei der Weiterleitung durch Zwischenknoten 30R unter Verwendung von network-coded cooperation, NCC. Hier sind wieder die Sendeknoten 30S, Relayknoten 30R und Empfangsknoten 30D dargestellt. In Fig. 4 ist auch das entsprechend codierte Datenpaket je Relayknoten 30R illustriert. Erzeugung eines codierten Pakets erfolgt hier durch netzwerkcodierte Kooperation, um die Weiterleitung effizienter durch kombinierte Pakete, das heißt durch Network Coding anstelle eines bloßen Relayings, erfolgen zu lassen.

Sowohl bei NCC als auch bei CC ist die Grundidee wie folgt: In der drahtlosen Kommunikation können Pakete von jedem Knoten innerhalb des Versorgungsbereichs empfangen werden. Durch Mithören ("Overhearing") kann ein Knoten auch Pakete empfangen, die eigentlich für andere Knoten bestimmt sind. Durch erneutes Senden dieser Pakete werden sie an den Zielknoten weitergeleitet. Network Coding ermöglicht die Kombination mehrerer Pakete für unterschiedliche Empfängerknoten. Netzwerkcodierte Kooperation erhöht die Diversitätsordnung der Kommunikation. Netzwerkcodierte Kooperation verbessert das Gesamtsystem und nicht nur eine einzelne Verbindung. Netzwerkcodierte Kooperation stellt eine zusätzliche Ebene oberhalb der Kanalcodierung dar. Bei NCC können mehrere Pakete kombiniert, codiert weitergeleitet werden. NCC ist dadurch effizienter als CC und wird daher nachfolgend betrachtet.

Wenn über Kanalcodierung die Möglichkeiten auf einem Link ausgeschöpft sind, bieten CC und insbesondere NCC großes Potenzial, da dadurch die Diversity Order (Anzahl der Ausbreitungspfade) des Gesamtsystems vergrößert wird.

In einem Kommunikationsnetzwerk legt eine Ressourcenzuweisung beziehungsweise Scheduling-Information fest, welcher Knoten welches Paket sendet oder zu empfangen versucht und zu welchem Zeitpunkt dies geschieht. Eine Scheduling-Information umfasst Beschreibungen der Slot-Funktion (Senden/Empfangen, RX/TX) sowie des Datentyps (Nutzdaten, Steuerdaten).

Das Scheduling stellt daher den zentralen Punkt für die Koordination von Fehlerkontrolle, Latenz, Datenfluss, Paketverteilung, Energieverbrauch usw. dar. Ein geeignetes Scheduling kann die Fehlerkorrektur unterstützen, beispielsweise durch Neuübertragungen, kooperative Kommunikationsstrategien oder Mehrhop-Kommunikationsrouten innerhalb einer Zykluszeit. Für die Ressourcenbelegung im System sowie für die Voraussetzung der Teilnehmer bedeutet NCC:
- Ein SNE muss in der Lage sein, Datenpakete für andere SNE (downlink) / von anderen SNE zu empfangen. Dieser Vorgang des Mitempfangs wird als Overhearing bezeichnet.
- Ein SNE verwendet dazu einen Empfangsslot.
- HC und SNE müssen in der Lage sein, uncodierte Pakete (Source Packets oder auch Native Packets) zu einem codierten Paket zusammenzufügen (Coded Packet) bzw. umgekehrt ein codiertes Paket zu decodieren. Der Codiergrad beschreibt die Anzahl der kombinierten Native Packets in einem Coded packet, wobei bei einem Codiergrad = 1 das Coded Packet einem Native Packet entspricht.
- SNE und ggf. HC müssen in der Lage sein, codierte Pakete auszusenden bzw. zu empfangen. Jede Paketweiterleitung benötigt einen weiteren Resource Block.
- Für die Bildung der coded packets (kodierten Packets) braucht es eine Bildungsvorschrift bzw. -verfahren.

Dabei gilt:
- Jedes Overhearing an einem SNE benötigt einen zusätzlichen Empfangs-Resource-Block, jede Paketweiterleitung und damit Paketaussendung einen zusätzlichen Sende-Resource-Block.
- Jeder Overhearing Vorgang bzw. jede zusätzliche Weiterleitung erhöht potenziell die Redundanz im System. Mehr Overhearing und mehr Aussendungen verbessern also potenziell die Verfügbarkeit bzw. Zuverlässigkeit der Übertragung.
- Jeder belegte Sende-Resource-Block im Resource Grid verringert die Anzahl an freien Resource Blocks und damit die Anzahl anderer Teilnehmer.
- Ebenso erhöht jeder zusätzliche benötigte Resource-Block an einem SNE (sowohl Sende- als auch Empfangs-Resource-Block) den Stromverbrauch.

Die zu lösende Aufgabe besteht darin, die Bildungsvorschriften bzw. -verfahren der NCC sowie die Belegung der Empfangs- bzw. Sende-Resource-Blocks so zu wählen, dass möglichst wenig Resource-Blocks benötigt werden und gleichzeitig die Zuverlässigkeit maximiert wird.

NCC beschreibt Verfahren, bei dem Source-Datenpakete vor einer Weiterleitung durch einen Router codiert zusammengefasst werden. Dabei werden mehrere Source-Datenpakete (Anzahl n) jeweils mit Koeffizienten (sog. Codierkoeffizienten) gewichtet und addiert. Hierfür wird die Algebra in endlichen Körpern eingesetzt und mit Multiplikation / Addition in Galois-Feldern mit einer Größe / Symbollänge von g bit gearbeitet.

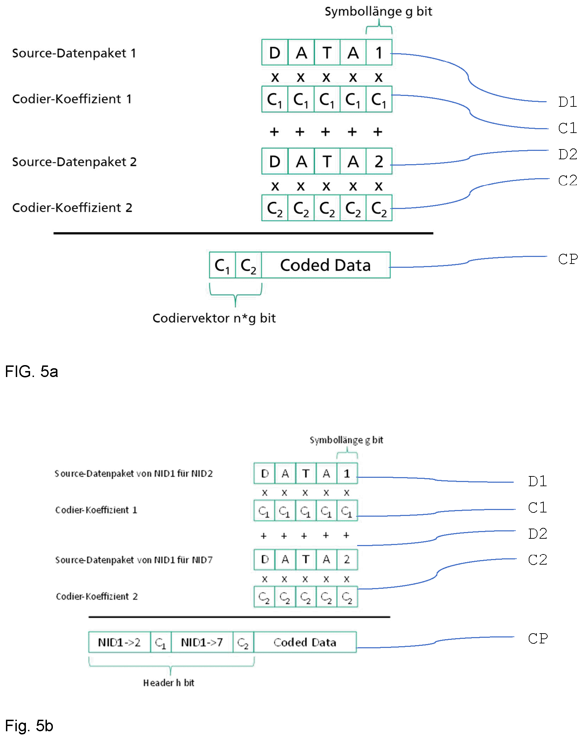

Fig. 5a zeigt eine beispielhafte Berechnung eines codierten Pakets CP basierend auf zwei Quellpaketen D1 und D2 unter Verwendung von entsprechenden Codierkoeffizienten C1 und C2. Hieraus ergibt sich Berechnung eines codierten Pakets CP anhand von N=2 source Paketen D1 und D2 einschließlich vorgestellter Signalisierung der Codierkoeffizienten C1 und C2.

Ein linear netzwerkcodiertes Paket (CP) wird wie folgt erzeugt: $CPj = {\sum }_{i}^{□} Ci Pj$

Hieraus wird beispielsweise eine Symbollänge von g = 8 bit und q = 256 verwendet. Die Operationen werden über einem endlichen Körper entsprechender Größe durchgeführt.

Wie Fig. 5b dargestellt kann ein entsprechender Header dem codierten Paket vorangestellt werden. Damit ein Empfänger das Paket decodieren kann, müssen Informationen über die beteiligten Source-Datenpakete und deren jeweilige Codierkoeffizienten bekannt sein. Diese Codierkoeffizienten werden üblicherweise zu einem sog. Codiervektor zusammengefasst.

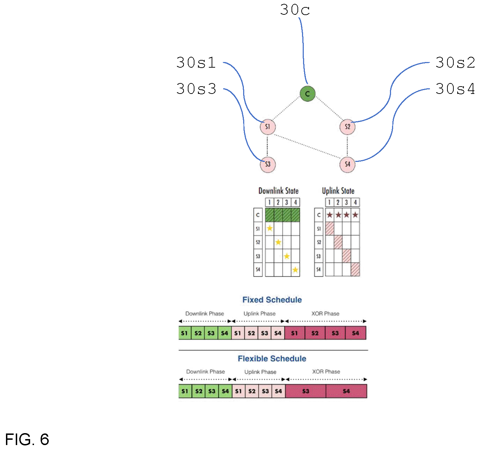

Anhand von Fig. 6 ist das XO-COW Konzept erläutert. Hier wird zwischen mehreren Kommunikationsphasen (Downlink und Uplink) unterschieden. Im Downlink wird beispielsweise von dem Netzknoten 30C eine Information, z. B. an die Netzknoten 30S1, 30S2, 30S3 und/oder 30S4 übermittelt. Im Uplink erfolgt eine Übermittlung von Daten von den Netzknoten 30S1-30S4 zu dem Netzknoten 30C.

Es gibt mehrere Kommunikationsphasen. Zunächst sendet der HC 30C in der Downlink-Phase uncodierte Downlink-Pakete an die SNEs30S1-30S4. Anschließend übermittelt jede SNE 30S1-30S4 in der Uplink-Phase ihr eigenes uncodiertes Uplink-Paket zusammen mit einem Bestätigungsbit (ACK-bit) für das empfangene Downlink-Paket.

In der anschließenden XOR-Phase wird - abhängig vom verwendeten Scheduling-Verfahren - die verfügbare Zeit entweder gleichmäßig auf alle Knoten oder gezielt auf diejenigen verteilt, die Unterstützung benötigen. Entsprechend ist die Übertragungsrate geringer.

Dabei kombinieren starke Knoten die empfangenen Downlink- und Uplink-Nachrichten erfolgloser Knoten mittels XOR-Codierung. Während des Zeitschlitzes eines erfolglosen Knotens senden alle starken Knoten, die dessen Nachricht erfolgreich empfangen haben, gleichzeitig als Broadcast-Relays das XOR-codierte Paket unter Verwendung von distributed space-time code (DSTC). Dieses Verfahren funktioniert nur bei einer gleichzeitigen Aussendung der Relay-Knoten.

In jedem Fall XOR-verknüpfen die starken Knoten die Downlink- und Uplink-Nachrichten der jeweils erfolglosen Knoten, die sie empfangen haben. Während des Zeitschlitzes eines erfolglosen Knotens (zum Beispiel Knoten Y) agieren alle starken Knoten, die Knoten Y erfolgreich empfangen haben, als gleichzeitig sendende Broadcast-Relays und übertragen das XOR-Codierte Paket mittels DSTC. Das funktioniert regelmäßig bei gleichzeitiger Aussendung der Relay-Knoten (DSTC).

Nachfolgend wird ein Verfahren zum Betreiben eines Kommunikationssystems gemäß Ausführungsbeispielen erläutert.

Das entwickelte Verfahren kann entsprechend Ausführungsbeispielen für Kommunikationssysteme eingesetzt werden, bei denen eine bidirektionale Kommunikation zwischen HC und SNE zyklisch erfolgt, die Topologie ist auf Anwendungsebene somit sternförmig. Die Sendevorgänge sind grundsätzlich vorab geregelt. Dies kann bspw. mittels einer Ressourcenmatrix und Belegung von Resource-Blocks erfolgen. Die zyklische Übertragung kann
- einem zeitlich festem TDMA Scheduling folgen (deterministische Zykluszeit), bspw. bei 5G, 6G, IO-Link Wireless, DECT NR (cyclic mode), UWIN,
- nur in der Reihenfolge der Übertragungsvorgänge folgen und der Kanalzugriff bspw. per CSMA- bzw. LBT-Verfahren erfolgen, bspw. Bei WIFI 802.11, DECT NR (LBT mode).

Für die zeitliche Steuerung wird eine gemeinsame Zeitbasis in den Funkknoten verwendet, wobei sich je nach Verfahren oder Zykluszeit die Auflösung bzw. Genauigkeit der Zeitbasis unterscheiden kann.

Eine spontane, schnelle Änderung der Belegung der Ressourcematrix innerhalb des aktuellen Kommunikationszykluses ist nicht vorgesehen. Eine Umkonfiguration der Ressourcenmatrix kann für nachfolgende Zyklen erfolgen.

Die Funkknoten kommunizieren untereinander, d.h. die SNE befinden sich tendenziell alle in Funkreichweite des HC sowie tendenziell in Funkreichweite untereinander. Dadurch kann der so genannte Overhearing-Effekt genutzt werden. Dabei können Funkknoten durch Mitlauschen auch Datenpakete empfangen, die nicht für sie bestimmt sind, sondern eigentlich für andere Funkknoten, und diese dann verarbeiten und weiterleiten.

Die Funkknoten können eine Information über die Qualität des Paketempfangs intern zur Verfügung stellen (Link Quality Indicator LQI). Diese kann bspw. sein: Empfangsfeldstärke des Pakets, Signal-Rausch-Abstand beim Empfang, Bitfehlerrate vor Fehlerkorrektur bei Kanalcodierung.

Zur Anwendung entsprechend Ausführungsbeispielen kommt NCC, organisiert in mehreren Phasen:
- Downlinkphase: HC sendet die Pakete für die SNE. In Skizze wird gleichzeitig auf mehreren Frequenzkanälen übertragen. Wird dies technisch im System nicht unterstützt kann die Ressourcen-Belegung auch nacheinander erfolgen. (im Beispiel unten Slot 0-2)
- Uplinkphase: Jedes SNE sendet sein Paket in Richtung HC. Gleichzeitig wird das empfangene Downlinkpaket codiert mitübertragen. D.h. eine Kennung ist Teil des Codiervektors und stellt dadurch eine Rückmeldeinformation für das HC bzw. andere SNE dar, ob das SNE sein Downlinkpaket erfolgreich empfangen konnte.

Dies könnte auch alternativ entsprechend Ausführungsbeispielen über eine Acknowledge-Information (bspw. ACK-bit) signalisiert werden. (im Beispiel unten Slot 4-6). Zur Erklärung: "A+a" bedeutet die symbolweise Addition der Pakete "A" und "a" durch Arithmetik in endlichen Körpern, bspw. Galois-Körper.
- NCC-Phasen: Jedes SNE sendet codiert das Down- und Uplink eines anderen SNE (im Beispiel unten Slot 8-10).

Es kann mehrere NCC-Phasen geben, in denen unterschiedliche SNE unterstützt werden können, d.h. andere Codiervektoren verwendet werden.

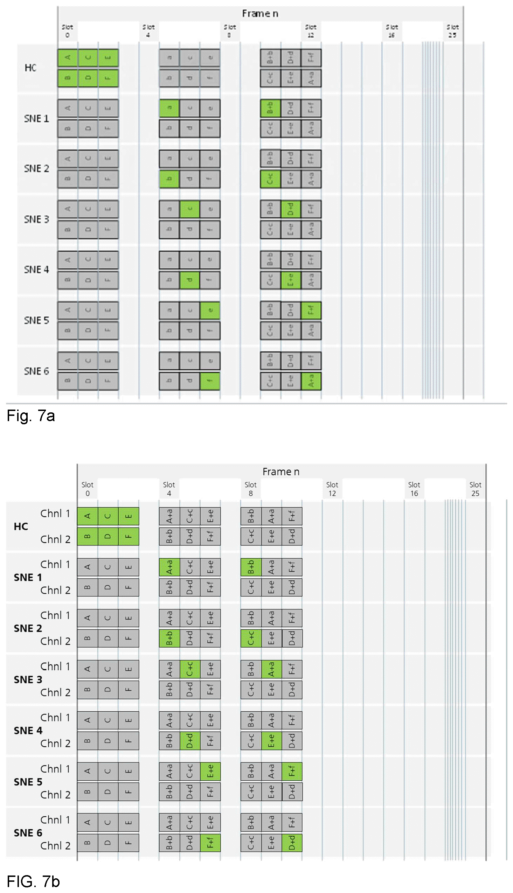

Fig. 7a zeigt NCC-Basiskonzept anhand von Ressourcenbelegungen. Es gibt mehrere Kommunikationsphasen: In der Downlink-Phase sendet der HC uncodierte Downlink-Pakete an die SNE. In der Uplink-Phase sendet die SNE ein eigenes Uplink-Paket.

Die NCC-Phase 1 ermöglicht, dass die SNE ein weitergeleitetes Paket für eine andere SNE oder für den HC sendet. Darüber hinaus gibt es optionale NCC-Phasen 2 bis n: Die SNE sendet weitere weitergeleitete Pakete n ... für andere SNEs oder für den HC.

Eine beispielhafte NCC-Ressourcenbelegung ist in Fig. 7b dargestellt. Hier sind auf der X-Achse die einzelnen Frames und auf der Y-Achse die Kommunikationen durch die einzelnen Netzknoten HC, SN1-SN6 jeweils für Kanal 1 / channel 1 und Kanal 2 / channel 2 dargestellt. Diese Ressourcenbelegung aus Figur 7b basiert auf der Ressourcenbelegung aus Fig. 7a, die das NCC-Basiskonzept zeigt.

Wie zu erkennen ist, werden entsprechend Ausführungsbeispielen in dem ersten oder den ersten Slots 0, 1 und 2 die Datenpakete A-F uncodiert gesendet, während in den folgenden Slots, auch zweite Slots genannt (vergleiche Subslot 4) die Datenpakete codiert gesendet werden, z. B. A+a, B+b, etc.

Ein Ausführungsbeispiel schafft einen Netzknoten, insbesondere eine Subnetzeinheit, SNE, die erste Downlink-Daten A, B, C, ... in einem oder mehreren ersten Zeitschlitzen Slot 1, Slot 2, Slot 3 empfängt und erste Uplink-Daten a, b, c, ... in einem oder mehreren zweiten Zeitschlitzen Slot 5, Slot 6 und Slot 7 sendet. Die ersten Uplink-Daten A+a, B+b, etc. werden als codierte Daten gesendet, die mit den ersten Downlink-Daten A, B, C, .. codiert sind. Zu der Kodierung A+a sei angemerkt, dass die Pakete auch immer gewichtet sein können, also k*A+n*a. Alternativ kann der Uplink auch in Form von erweiterten Daten umfassend die ersten Uplink-Daten a, b, c, ... sowie eine von den ersten Downlink-Daten abgeleitete Information A', B', ... gesendet werden.

Entsprechend Ausführungsbeispielen kommt ein Verfahren für opportunistische Network Coded Cooperation in URLLC-/HRLLC-Funksystemen zum Einsatz. Opportunistisch bedeutet hier, dass sich das Kooperationsverhalten des Funksystems an die tatsächlichen Verhältnisse anpasst.

Entsprechend Ausführungsbeispielen kommt ein Verfahren mit einem dynamischer Codiervector zum Einsatz.

Die beispielhafte NCC-Ressourcenbelegung legt für SNE1 in Slot 8 die Aussendung eines Coded Packets mit dem Codiervektor "B+b" fest. Dies ist als statische Festlegung jedoch von Nachteil, wenn das Packet "b" kommend von SNE2 nicht empfangen werden kann.

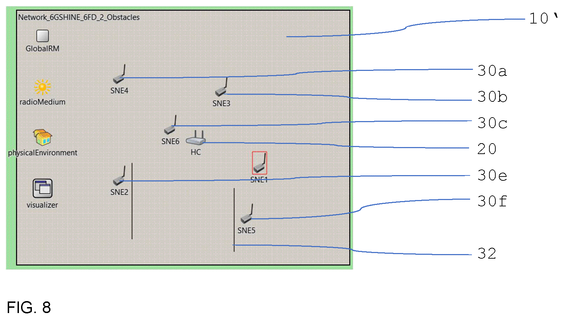

Fig. 8 zeigt eine schematische Darstellung eines Netzwerks 10' mit der Basisstation 20 und den einzelnen Netzknoten 30A-30F. Darüber hinaus sind auch noch einige Hindernisse 32 im Bereich der Netzknoten 30E und 30F dargestellt. Durch diese Hindernisse 32 werden die Übertragungspfade von den Netzknoten 30E und 30F gestört.

In **Fehler! Verweisquelle konnte nicht gefunden werden.** ist der Pfad zwischen SNE2 zu SNE1 gestört. Abhängig von der Größe des Hindernisses kann es zu einer Blockierung der Verbindung zwischen SNE & HC oder zu anderen SNCs kommen. SNE1 kann also SNE2 mittels NCC nicht unterstützen. Eine dynamische Anpassung der NCC, genauer des Codiervektors einer Aussendung in der NCC-Phase ist vorteilhaft. Opportunistische NCC basierend auf dynamischer Anpassung des Codiervektors und/oder dynamischer Anpassung eines NCC-Levels und/oder dynamischer Anpassung einer Clusterzusammensetzung kann eine signifikante Verringerung der Paketverlustrate einer Kommunikation zwischen HC und SNE haben.

Exkurs zu Ressourcenzuweisung: Eine geeignete deterministische Scheduling-Strategie kann Folgendes verwenden:
- ein statisches Scheduling,
- ein dynamisches Scheduling, das von jedem Knoten auf Grundlage lokaler Empfangsinformationen (RX-Informationen) gehandhabt wird,
- oder ein dynamisches Scheduling, das auf Signalisierung durch eine zentrale Ressourcenverwaltung oder auf Signalisierung zwischen den Knoten basiert.

Ein Paket wird z.B. innerhalb einer Zykluszeit (d. h. innerhalb einer Rahmendauer oder kürzer) zugestellt werden. Die Verarbeitungsverzögerung ist ein wichtiger zu berücksichtigender Faktor. Daher könnten ARQ oder andere auf Signalisierung basierende Handshake-Verfahren schwierig umzusetzen sein. Ein Scheduling ist für einen Rahmen festgelegt, kann gem. Ausführungsbeispielen jedoch für den darauffolgenden Rahmen geändert werden. Eine dynamische Anpassung innerhalb eines Rahmens kann auf Paketebene erfolgen, beispielsweise abhängig vom Inhalt des Pakets.

Bei der Ressourcen Allokation können KPI verwendet werden, wie zum Beispiel die Paket-Verlustrate, die Cycle Zeit, die Anzahl der unterstützten Knoten und/oder Energieverbrauch, um Zuverlässigkeit, Link-Qualität, Fehler-Handling bei Hindernissen etc. zu beurteilen. Gerade bei der Beurteilung der Verbindungsqualität - allgemein Analyse - können genau diese KPI entsprechend Ausführungsbeispielen hinzugezogen werden, um beispielsweise einen Handlungsbedarf zu bestimmen.

Verfahren gemäß Ausführungsbeispielen: Vor der NCC-Phase erfolgt im SNE eine Analyse der empfangenen Downlink-Pakete des HC sowie der Uplink-Pakete anderer SNE. Aus diesen kann ein SNE ableiten:
- Wie gut der eigene HC-Empfang ist. Basis dafür ist der LQI, bspw. Empfangsfeldstärke des Pakets, Signal-Rausch-Abstand beim Empfang, Bitfehlerrate vor Fehlerkorrektur bei Kanalcodierung
- Ob und wie gut andere SNE empfangen werden. Basis dafür ist wieder ein LQI.
- Ob ein anderes SNE das HC empfangen konnte. Das lässt sich aus dem mit übertragenen Codiervektor des codierten Pakets ableiten, je nachdem ob bzw. wie gewichtet Native Packets enthalten sind. Im Beispiel hier werden codiert das Uplink-Paket und das Downlink-Paket (bspw. "A+a" durch SNE1 in Slot 4) gesendet. Konnte SNE1 das Downlink-Paket nicht empfangen, kann es nicht hinzucodiert werden und fehlt damit auch im Codiervektor

Das Gewicht (Koeffizient) für die Codierung kann bspw. Informationen über den LQI enthalten.

Aus diesen Informationen lässt sich ein Indikator pro Nachbar-SNE bestimmen, der angibt, ob ein Nachbar-SNE Unterstützung mittels NCC braucht.

Einfaches Beispiel für SNE1 zur Bestimmung des NeedHelplndicator NHI2 für SNE2:
- NHI2 = 0
- Wenn das Nachbar-SNE2 durch Overhearing empfangen wurde: NHI2 = NHI2 + 1000
- Wenn in dem Uplinkpaket des Nachbar-SNE2 dessen Downlink-Paket NICHT enthalten war, das Nachbar-SNE also das HC nicht empfangen konnte: NHI2 = NHI2 + 1000
- Addiere die Empfangsqualität des Pakets von Nachbar-SNE2: NHI2 = NHI2 + Empfangsqualitätsindikator2

Basierend auf den NHls für jedes andere Nachbar-SNE kann das SNE1 entscheiden, welchem Nachbar-SNE durch die Aussendung des codierten Up- und Downlink-Pakets für dieses Nachbar-SNE geholfen wird.

Einfaches Beispiel für SNE1:

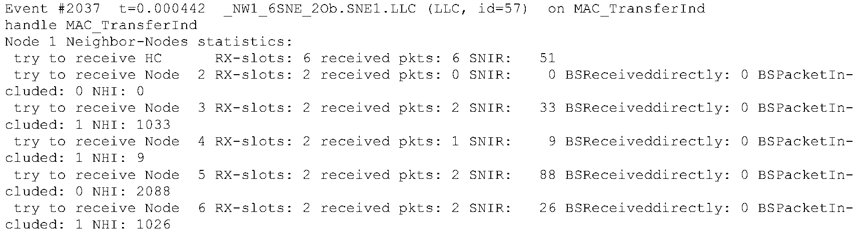

In diesem Beispiel würde sich SNE1 dafür entscheiden SNE5 zu helfen, d.h. SNE1 sendet in Slot 8 / Channel 1 ein NCC-Paket mit dem Codier-Vektor "E+e" statt wie vorgesehen "B+b" aus.

Diese Entscheidung erfolgt entsprechend Ausführungsbeispielen dezentral durch das SNE1 30a. Die Anpassung des Codingvectors braucht keine Schleife über das HC 20.

Die Anpassung des Codier-Vektors benötigt keine Änderung der Ressourcen-Belegung, der Sende-Slot wird wie vorgesehen genutzt, es ändert sich nur der Inhalt des Pakets.

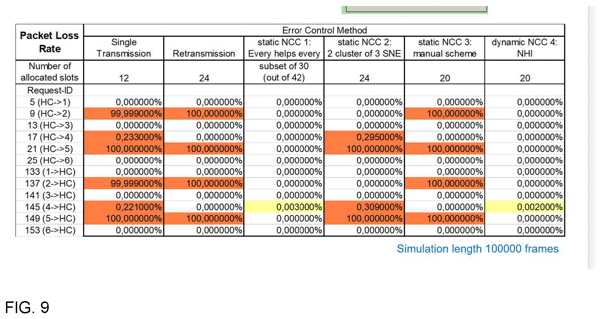

Fig. 9 zeigt eine Tabelle zur Illustration der Zuverlässigkeit im Netzwerk. Hier sind Simulationsergebnisse dargestellt, die nachfolgend erläutert werden: NCC kann die Zuverlässigkeit in einem Netzwerk mit Hindernissen, die zu einer schlechten Funkverbindung und damit zu Paketfehlern führen, erheblich verbessern.

Allerdings kann NCC versagen, wenn die falschen Knoten miteinander kooperieren.

Opportunistische Codierung: Eine Analyse der empfangenen codierten Pakete nach dem ersten Uplink sowie die Berechnung eines "Need Help Indicators" in jeder SNE erscheinen sehr vielversprechend, da der Codierungsvektor des NCC dynamisch an die tatsächliche Topologie beziehungsweise die Verbindungsqualität angepasst werden kann.

Entsprechend Ausführungsbeispielen kommt ein Verfahren mit dynamischem NCC-Cluster zum Einsatz.

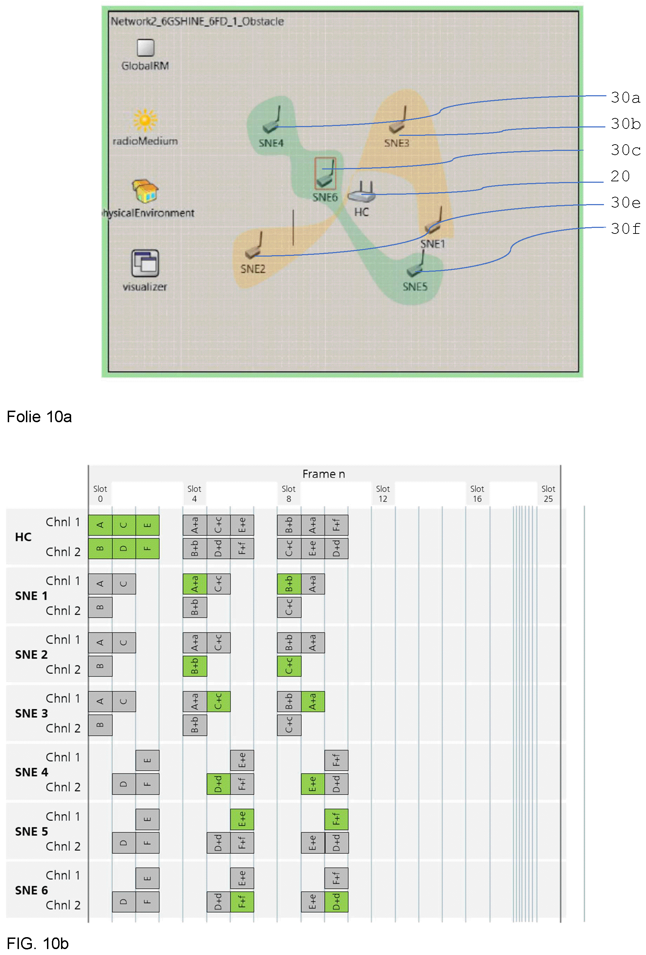

Fig. 7b zeigt in der beispielhaften Ressourcenbelegung ein vollständiges Overhearing im System. D.h. jedes SNE kann potenziell alle Aussendungen aller anderen SNE empfangen sowie alle Downlink Aussendungen des HC. Das führt zu sehr vielen Empfangsvorgängen am SNE und damit Stromverbrauch. Dies kann ferner durch eine Clusterbildung verbessert werden. Eine Clusterbildung ist in Fig. 10a dargestellt. Hier sind die SNEs 30a und 30f (Cluster 1) sowie die SNEs 30b, 30c und 30d (Cluster 2) geclusterd. Nur SNEs innerhalb eines Clusters kooperieren.

Fig. 10b zeigt eine weitere Ressourcenbelegung entsprechend einem weiteren Ausführungsbeispiel, bei welchem Cluster, hier zwei Cluster, aus mehreren SNEs, hier drei SNEs, vorgesehen sind. Hier bilden SNE1, SNE2 und SNE3 ein gemeinsames NCC-Cluster und SNE4, SNE5 und SNE6 ein zweites Cluster.

Die Kommunikation erfolgt in mehreren aufeinanderfolgenden Phasen. Zunächst überträgt der HC in der Downlink-Phase uncodierte Downlink-Pakete an die SNEs. Anschließend senden die SNEs in der Uplink- beziehungsweise Feedback-Phase ihre eigenen Uplink-Pakete zurück. In den darauffolgenden NCC-Phasen unterstützen sich die SNEs gegenseitig, indem sie weitergeleitete Pakete für andere SNEs übertragen. Mit jeder zusätzlichen NCC-Phase kann die Zusammenarbeit zwischen mehreren SNEs erweitert werden, wodurch die Zuverlässigkeit der Kommunikation erhöht wird.

Die Darstellung des Diagramms entspricht dem Diagramm aus Fig. 7b. In den ersten Slot (mit seinen Subslots) bzw. den ersten Slots wird wiederum ein uncodiertes Datenpaket übermittelt, wobei ausgehend von der Clusterung die einzelnen Kanäle und Slots bereits in die zwei Gruppen SNE1-SNE3 und SNE4-SNE6 aufgeteilt sind.

In den zweiten oder dritten Slots (mit ihren Subslots 4,5,6 bzw. 8, 9, 10) werden dann die codierten Datenpakete A+a - C+c in dem Cluster 1 und D+d - F+f in der Gruppe 2 übermittelt. Wie hier zu erkennen ist, erfolgt Zuordnung von Slots und Kanälen in dem gleichen Muster wie bei der Übermittlung der uncodierten Datenpakete in den Slots 0-3.

D.h. für opportunistisches NCC im Downlink sendet der HC uncodierte Downlink-Pakete an die SNE, wobei im Uplink und Feedback die SNE ein eigenes Uplink-Paket zusammen mit dem empfangenen Downlink-Paket als Feedback sendet. Die SNE sendet standardmäßig weitergeleitete Pakete für andere SNE+1 (NCC-Phase 1). Der Codierungsvektor (CV) kann jedoch dynamisch angepasst werden.

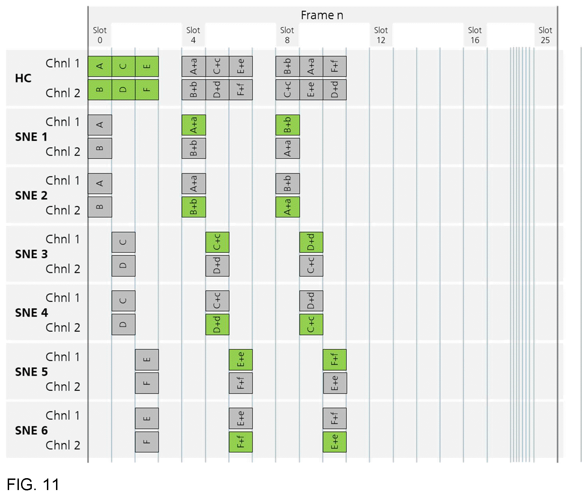

Fig. 11 zeigt eine mit Fig. 10a und 10b vergleichbare Darstellung. Hier sind drei Cluster für zwei SNEs vorgesehen. Hier bilden SNE1, SNE2 ein gemeinsames NCC-Cluster, SNE3, SNE4 ein zweites Cluster und SNE5, SNE6 ein drittes Cluster. Das erste Cluster umfasst SN1 und SN2, das zweite Cluster SN3 und SN4, das dritte Cluster SN5 und SN 6. Analog zu den vorher erläuterten Übertragungsverfahren wird in dem ersten Slot 0, 1 und 2 die uncodierten Datenpakete A-F übermittelt, während in den zweiten und dritten Slots (vergleiche Slot 4 ff.) die codierten Datenpakete A+a - E+e codiert übermittelt werden. Jedem Cluster ist hier sowohl für den ersten Slot als auch für den zweiten und weitere Slots ein entsprechender Subslot zugeordnet.

Mit kleineren NCC-Cluster-Größen sinkt die Anzahl der benötigten RX-Ressourcen für overhearing für eine NCC, was grundsätzlich ein Vorteil hinsichtlich Stromverbrauchs ist. Allerdings ist der Kreis der SNE auch kleiner, die sich gegenseitig unterstützen können, was die Redundanz im System und damit die Resilienz gegen einzelne Paketfehler verringert. Im Beispiel von Fig. 8 kann dem SNE5 nur durch SNE1 oder ggf. SNE3 geholfen werden. Diese wären gemäß Fig. 10b oder 11 nicht in einem gemeinsamen Cluster. Eine NCC wäre damit nicht möglich.

NCC kann die Zuverlässigkeit in Netzwerken mit Hindernissen, die zu schlechten Verbindungen und damit zu Paketfehlern führen, erheblich verbessern, wie Fig. 9 darstellt. Allerdings kann die Verbessurung von NCC auch beschränkt sein, wenn ungeeignete Knoten miteinander kooperieren. Besonders vielversprechend erscheint daher ein opportunistischer Codierungsansatz, bei dem die nach dem ersten Uplink empfangenen codierten Pakete analysiert und in jeder SNE ein "Need Help Indicator" (NHI) berechnet wird. Auf dieser Grundlage kann der Codierungsvektor des NCC dynamisch an die tatsächliche Netzwerktopologie beziehungsweise die aktuelle Verbindungsqualität angepasst werden.

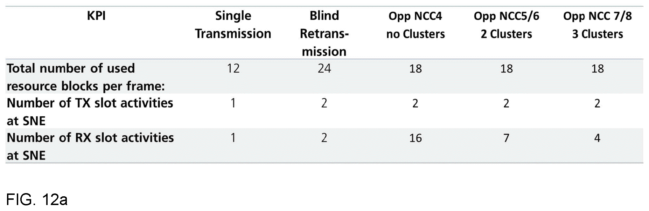

Fig. 12a zeigt eine Tabelle zur Übersicht der Ressourcen für verschiedene Verfahren. Die gesamte Ressourcenzahl ist bei der single transmission (Einzelübertragung) am geringsten, bei der blind retransmission (blinde Wiederholübertragung) am höchsten. Durch oben erläutertes Verfahren mit und ohne Clusterung (vergleiche Spalte 3, 4 und 5) wird im Vergleich zur blind retransmission eine reduzierte Framezahl im Vergleich zur single transmission eine erhöhte Framezahl erreicht, wobei abhängig von der Clusterung die Anzahl der aktiven Sendeslots und aktiven Empfangsslots reduziert werden kann, um so Störungen auszuschließen.

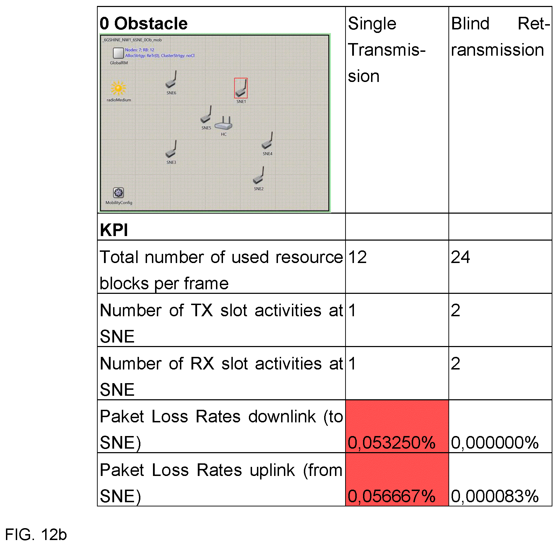

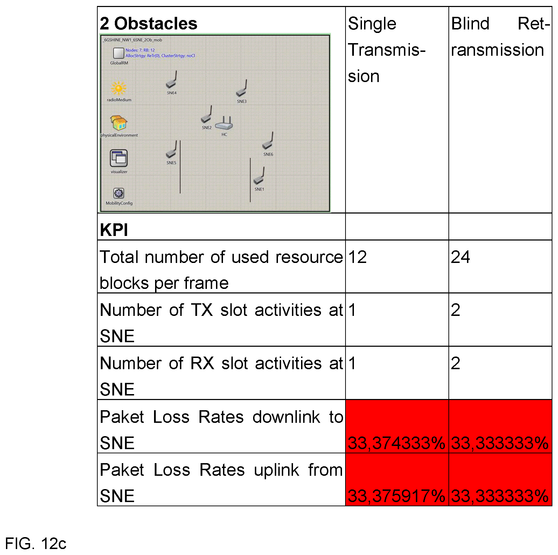

Fig. 12b und 12c zeigen einmal mit (Fig. 12c) und einmal ohne Hindernis (Fig. 12b) die resultierende Verlustrate für eine Single-Transmission und Blind-Retransmission ohne Einsatz des beschriebenen Konzepts. Wie in Fig. 12b gezeigt erfüllt eine Einzelübertragung die Anforderungen nicht. Unter Sichtlinienbedingungen (LoS-Bedingungen) ist eine blinde Neuübertragung ausreichend. Wie in Fig. 12c gezeigt blockieren Hindernisse die Übertragungspfade zwischen dem HC und einigen SNEs. Eine blinde Neuübertragung kann blockierte Verbindungen nicht kompensieren.

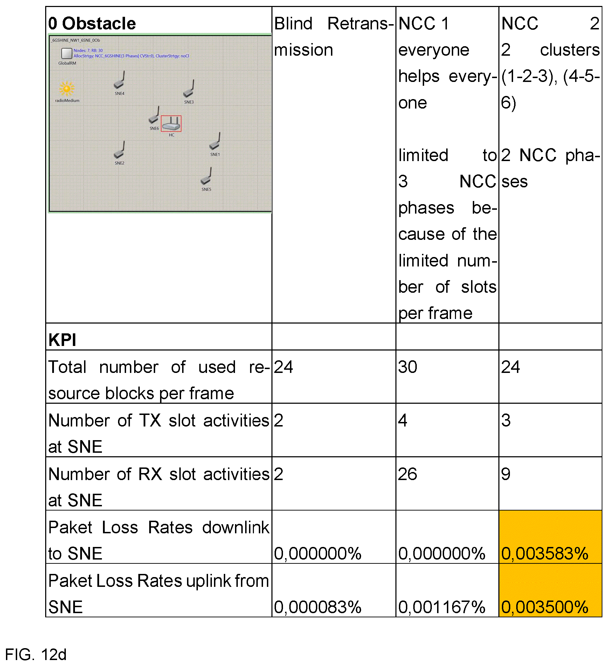

Fig. 12d (ohne Hindernis) und 12e (mit Hindernis) zeigen jeweils in einer Tabelle die statische NCC in Beurteilung hinsichtlich Gesamtanzahl der verwendeten Ressourcenblöcke pro Frame, Anzahl von aktiven Sendern und Empfangsslots sowie entsprechender Paket Verlustrate für den Ansatz NCC. Es ist zu erkennen, dass jede NCC-Phase die Anzahl der benötigten Ressourcen erhöht und dass zusätzliche NCC-Phasen die Zusammenarbeit einer größeren Anzahl von SNEs ermöglichen. Eine stärkere Zusammenarbeit führt zu mehr Redundanz und damit zu einer höheren Zuverlässigkeit. Clustering kann die Anzahl der Empfangsaktivitäten (RX-Aktivitäten) erheblich reduzieren.

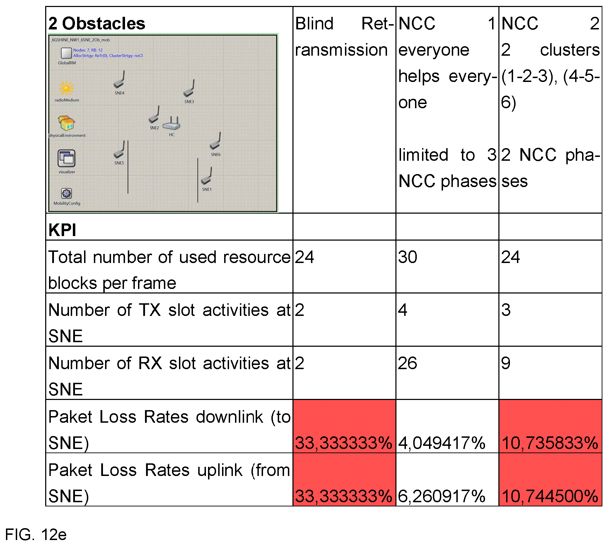

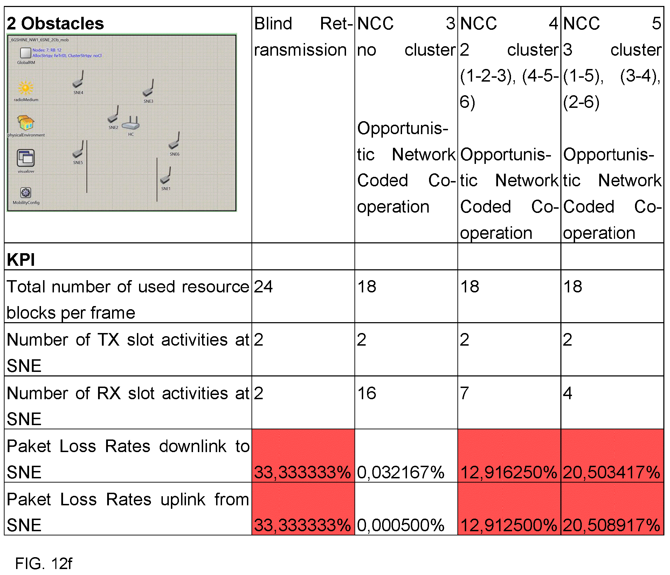

Fig. 12e und 12f (mit Hindernis) zeigen jeweils in einer Tabelle die statische NCC in Beurteilung hinsichtlich Gesamtanzahl der verwendeten Ressourcenblöcke pro Frame, Anzahl von aktiven Sendern und Empfangsslots sowie entsprechender Paket Verlustrate für den Ansatz opportunistisch NCC. Zu Fig. 12e sein angemerkt, dass NCC die Paketfehlerrate insbesondere bei blockierten Verbindungen deutlich verbessern kann. Der Erfolg der Kooperation hängt jedoch maßgeblich davon ab, dass die geeigneten Knoten für die Zusammenarbeit ausgewählt werden. Dies gilt insbesondere bei Cluster-basierten Ansätzen, bei denen eine falsche Auswahl kooperierender Knoten die Leistungsfähigkeit des Systems beeinträchtigen kann. Statische NCC-Ansätze stoßen hierbei an ihre Grenzen, da sie nicht flexibel auf Änderungen der Topologie oder der Verbindungsqualität reagieren können.

Zu Fig. 12f sein angemerkt, dass die Identifikation von Knoten mit Problemen durch die Analyse der empfangenen codierten Pakete des ersten Uplinks sowie durch die Berechnung eines "Need Help Indicators" (NHI) möglich ist. Auf dieser Grundlage kann der Codierungsvektor des NCC dynamisch an die tatsächliche Netzwerktopologie beziehungsweise die aktuelle Verbindungsqualität angepasst werden, indem der NHI aller benachbarten SNEs ausgewertet wird. Dadurch kann opportunistisches NCC innerhalb eines einzelnen Rahmens umgesetzt werden. Zudem erhöht jede NCC-Phase die Unterstützung für andere Knoten, wobei eine einzelne NCC-Phase jeweils nur einer weiteren SNE-Unterstützung bietet.

Die opportunistische NCC und das dynamische Clustering basieren gemäß Ausführungsbeispielen auf mehreren sich überlagernden Anpassungsschritten. Hierzu gehören die dynamische Anpassung des Codierungsvektors auf Grundlage des "Need Help Indicators" (NHI), die dynamische Anpassung der NCC-Stufe und der Clustergröße sowie die dynamische Bildung von Clustern. Während die Anpassung des Codierungsvektors bereits innerhalb eines einzelnen Frames wirkt und Paketverluste durch gezielte Unterstützung vermeiden kann, wirken Änderungen der NCC-Stufe typischerweise im nächsten Frame und optimieren die Ressourcennutzung sowie die Effizienz des Systems. Die dynamische Anpassung der Clusterzusammensetzung reagiert dagegen auf die tatsächliche Netzwerktopologie beziehungsweise auf Änderungen der Topologie und ermöglicht eine Optimierung der NCC-Performance mit möglichst kleinen Clustern.

Der NHI kann gemäß Ausführungsbeispielen wie folgt verwendet werden: Im Ergebnis ist die Identifikation von Knoten mit Problemen ist durch die Analyse der empfangenen codierten Pakete des ersten Uplinks in einer SNE sowie durch die Berechnung eines "Need Help Indicators" (NHI) möglich. Der Codierungsvektor des NCC wird dynamisch an die tatsächliche Topologie beziehungsweise die Verbindungsqualität angepasst, indem der NHI aller benachbarten SNE ausgewertet wird. Opportunistisches NCC kann innerhalb eines einzelnen Rahmens verarbeitet werden. Jede NCC-Phase kann die Unterstützung für andere Knoten erhöhen, wobei eine NCC-Phase jedoch jeweils nur eine andere SNE unterstützt.

Es wird ein NCC-Level eingeführt, der mit einer NCC-Cluster-Größe verknüpft ist.

| | | |
|---|---|---|
| NCC-Level 1 | 1 Cluster mit 6 SNE | Cluster1.1: (SNE1, SNE2, SNE3, SNE4, SNE5, SNE6) |
| NCC-Level 2 | 2 Cluster mit je 3 SNE | Cluster2.1: (SNE1, SNE2, SNE3) |
| | | Cluster2.2: (SNE4, SNE5, SNE6) |
| NCC-Level 3 | 3 Cluster mit je 2 SNE | Cluster3.1: (SNE1, SNE2) |
| | | Cluster3.2: (SNE3, SNE4) |
| | | Cluster3.3: (SNE5, SNE6) |

Die Tabelle zeigt, wie durch Clustering unterschiedliche NCC-Stufen abhängig von der aktuellen Netzwerktopologie eingesetzt werden können. Dabei wird zunächst mit einer niedrigen NCC-Stufe begonnen und diese bei Bedarf angepasst, um Energie zu sparen und gleichzeitig die Zuverlässigkeit der Kommunikation zu verbessern. Werden Übertragungsfehler erkannt, kann die Kooperation zwischen mehr SNEs aktiviert werden, um die Robustheit des Systems zu erhöhen.

Einführung von NCC-Level 4 wäre auch möglich, was sich dann sehr ähnlich zu einer Single Transmission verhält.

Der NCC-Level kann durch das HC mittels Signalisierung vorgegeben werden. Dies kann systemweit (also für alle SNE) oder SNE-individuell erfolgen. (Grundsätzlich ist das natürlich möglich und es lässt sich dadurch ein Tradeoff zwischen Stromverbrauch und Zuverlässigkeit realisieren. Was ich noch nicht abschätzen kann, ist, wie gut der Tradeoff im Allgemeinen ist. Wenn systemweit der NCC-Level 2 vorgegeben ist und z.B. SNE 3 dann in den NCC-Level 3 schaltet, dann würde SNE3 nur noch versuchen mit SNE4 zusammenzuarbeiten, SNE4 würde aber noch mit SNE5 und SNE6 zusammenarbeiten) auch durch das SNE selbstständig angepasst werden, bspw. durch Auswertung der empfangenen Coded Pakets ähnlich wie beim "dynamischen Codiervektor". Stellt entweder das HC oder ein SNE einen Übertragungsfehler fest oder erkennt bereits vor einem Paketfehler eine schlechter werdende Verbindung (bzw. mittels Empfangsfeldstärke des Pakets, Signal-Rausch-Abstand beim Empfang, Bitfehlerrate vor Fehlerkorrektur bei Kanalcodierung) kann der NCC-Level für den nächsten Frame verringert werden und somit der Kreis der NCC vergrößert werden. Bei fehlerfreier NCC kann der NCC-Level (wieder) erhöht werden.

In einem weiteren, unabhängigen Schritt kann die Zusammensetzung der Cluster angepasst werden. Durch Analyse der beim HC empfangenen Coded Pakets kann auf die Topologie der SNE geschlossen werden. Insbesondere wird bei dynamischer Anpassung des Codiervektors erkannt, welches SNE welchem anderen SNE hilft/helfen kann. Durch Signalisierung kann eine angepasste Clusterzusammensetzung für die unterschiedlichen NCC-Level an die SNE verteilt werden. SNE können z.B. autonom ihren NCC-Level auf 1 erhöhen. Andernfalls würde die Signalisierung womöglich nie dieses SNE erreichen.

Diese könnte für das Beispiel wie folgt aussehen:

| | | |
|---|---|---|
| NCC-Level 1 | 1 Cluster | Cluster1.1: (SNE1, SNE2, SNE3, SNE4, SNE5, SNE6) |
| NCC-Level 2 | 2 Cluster | Cluster2.1: (SNE1, SNE3, SNE5) |
| | | Cluster2.2: (SNE2, SNE4, SNE6) |
| NCC-Level 3 | 3 Cluster | Cluster3.1: (SNE1, SNE5) |
| | | Cluster3.2: (SNE2, SNE6) |
| | | Cluster3.3: (SNE3, SNE4) |

Durch diese NCC-Cluster-Optimierung ergibt sich auch für den NCC-Level 3 eine optimale Kooperation.

Dynamischer Codiervektor und dynamische NCC-Cluster können entsprechend Ausführungsbeispielen ideal zusammenwirken. Dabei unterscheiden sich insbesondere die Reaktionszeiten:

| | |
|---|---|
| Dynamische Anpassung des Codiervektors | Wirkung innerhalb eines Frames |
| | Vermeidung von Paketverlusten durch NCC und gezielte gegenseitige Unterstützung durch Aussendung fehlender Pakete für andere SNE. |
| Dynamische Anpassung des NCC-Levels | Wirkung im nächsten Frame |
| | Reaktion auf veränderte Empfangssituationen im System. |
| | Optimierung der NCC-Performanz hinsichtlich Effizienz und Ressourcenbelegung. |
| Dynamische Anpassung der Cluster-Zusammensetzung | Wirkung erst nach einem bis einigen Frames |
| | Reaktion auf die tatsächliche Topologie bzw. Topologieänderungen. Optimierung der NCC-Performanz bei möglichst kleinen Clustern. |

Alle Beispiele wurden für eine NCC gezeigt. Grundsätzlich sind entsprechend Ausführungsbeispielen auch mehrere NCC-Phasen möglich. Dadurch kann ein SNE mehreren anderen SNE helfen, was die Redundanz im System weiter erhöht. Hierbei kommen dann auch Coded Packets mit höherem Codiergrad (>2) in Betracht. Ebenso sollten endliche Körper höherer Ordnung in Betracht gezogen werden.

Die Beispiele wurden mit 6 SNE gezeigt. Grundsätzlich ist bei einer anderen Anzahl von SNE die Clusterbildung festzulegen. Insbesondere ergibt sich bei einer primen Anzahl die Aufgabe, Cluster unterschiedlicher Größe festzulegen.

Entsprechend Ausführungsbeispielen kann das oben erläuterte Verfahren, was unter dem Begriff NCC bekannt ist, um entsprechende codierte Pakete gemäß dem obigen Ansatz erweitert sein, wobei eine dynamische Anpassung entsprechend Ausführungsbeispielen denkbar wäre.

Technisches Anwendungsgebiet ist URLLC/HRLLC-Funkkommunikationssysteme die
- zyklisch arbeiten (d.h. es findet ein regelmäßiger Datenaustausch zwischen HC und SNE statt),
- Echtzeitkommunikation unterstützen (d.h. z.B. die Zyklen sind deterministisch lang),
- niedrige Latenz aufweisen sollen,
- hohe/sehr hohe/extreme Zuverlässigkeit/Verfügbarkeit haben sollen.

### Ausführungsbeispiele weitere Netzknoten / Basisstation / System

Ein Ausführungszeichen schafft einen ersten Netzknoten, insbesondere eine Subnetzeinheit (SNE), mit einem Transceiver, der ausgebildet ist: erste Downlinkdaten (A) in einem oder mehreren ersten Zeitschlitzen zu empfangen; und erste Uplinkdaten (a) in einem oder mehreren zweiten Zeitschlitzen zu senden; wobei die ersten Uplinkdaten als codierte Daten (A+a) gesendet werden, die mit den ersten Downlinkdaten (A) codiert sind, oder als erweiterte Daten (a mit A') umfassend die ersten Uplinkdaten (a) sowie eine von den ersten Downlinkdaten abgeleiteten Information (A') gesendet werden.

Ein Ausführungszeichen schafft einen zweiten Netzknoten, insbesondere eine Subnetzeinheit (SNE), mit einem Transceiver, der ausgebildet ist, erste Downlinkdaten und erste Uplinkdaten in einem oder mehreren ersten Zeitschlitzen zu empfangen; und codierte Daten, die die ersten Uplinkdaten codiert mit den ersten Downlinkdaten oder codiert mit einer von den ersten Downlinkdaten abgeleiteten Information codiert sind in einem oder mehreren zweiten Zeitschlitzen zu empfangen; und erste Downlinkdaten und erste Uplinkdaten in einem oder mehreren dritten Zeitschlitzen zu senden, wenn anhand der in dem einen oder mehreren zweiten Zeitschlitzen empfangenen Daten ein gestörter Fall identifiziert wurde.

Ein Ausführungszeichen schafft einen Netzknoten, insbesondere eine Subnetzeinheit (SNE), mit einem Transceiver, der ausgebildet ist: erste Uplinkdaten (a) in einem oder mehreren ersten Zeitschlitzen zu senden; und erste Downlinkdaten (A) in einem oder mehreren zweiten Zeitschlitzen zu empfangen; wobei die ersten Downlinkdaten als codierte Daten (A+a) gesendet werden, die mit den ersten Uplinkdaten (a) codiert sind, oder als erweiterte Daten umfassend die ersten Downlinkdaten (A) sowie eine von den ersten Uplinkdaten abgeleiteten Information (a') gesendet werden. Unterschied zu dem obigen Netzknoten liegt darin, dass zuerst Uplink und dann Downlink Daten gesendet / empfangen werden.

Ein Ausführungszeichen schafft eine Basisstation, insbesondere HC-Einheit, die ausgebildet ist, erste und/oder zweite Downlinkdaten in einem oder mehreren ersten Zeitschlitzen zu senden; und eine oder mehrere Netzknoten zu einem oder mehreren Clustern zu clustern.

Ein Ausführungszeichen schafft ein Subnetzwerk umfassend zumindest eine erste Subnetzeinheit und/oder eine zweite Subnetzeinheit und/oder einer Basisstation.

Nachfolgend wird das ober erläutert Prinzip anhand von einem Artikel erläutert.

Die untersuchten und vorgeschlagenen Verfahren sind mit der Technologiekomponente #TC8 Makrodiversität innerhalb von Subnetzwerken verknüpft.

Network Coded Cooperation (NCC) wurde als ein Verfahren untersucht, um Makrodiversität zu erreichen, und unterschiedliche Codierungs- und Ressourcenzuweisungsstrategien für NCC in Subnetzwerken wurden entwickelt und verglichen.

Der primäre Anwendungsfall ist die Steuerung von Robotern, aber das Verfahren ist nicht auf diese Anwendung beschränkt. Es kann auch auf andere Szenarien, wie Kommunikation in Fahrzeugen, angewendet werden. Im Zusammenhang mit Robotersteuerung oder anderen industriellen Subnetzwerken erfordern diese Szenarien extrem niedrige Zykluszeiten und hochzuverlässige Zugriffsprotokolle, um einen nahtlosen Betrieb zu gewährleisten und strenge Kommunikationsanforderungen zu erfüllen.

Bei der Simulation wurde ein TDMA/TDD-System untersucht, das Zykluszeiten von 250 µs unterstützt. Dies erreicht eine 4-10-fache Verringerung der Zykluszeit im Vergleich zu 5G.

Der wichtigste KPI von NCC ist die Erhöhung der Zuverlässigkeit, einschließlich der Ressourcenblöcke, die für die Übertragung der Pakete erforderlich sind. Die Zuverlässigkeit kann mit NCC dramatisch erhöht werden, insbesondere bei Vorhandensein von Hindernissen. Die von Hindernissen betroffenen Verbindungen können durch NCC effizient kompensiert werden. Anstelle von Kommunikationsausfällen, wie sie bei klassischen Fehlersteuerungsverfahren auftreten würden, die auf Neuübertragung basieren, ermöglicht NCC immer noch eine fehlerfreie Übertragung (im Sinne einer Wahrscheinlichkeit für 2 aufeinanderfolgende Paketausfälle < 10⁻⁹), während die Anzahl der notwendigen Ressourcenblöcke gleich oder sogar niedriger gehalten wird.

Ergebnisse, die diese Ansprüche unterstützen, werden im Abschnitt Network Coded Cooperation vorgestellt.

Network Coding (NC) adressiert in Kommunikationssystemen Informationen, die zwischen zwei Endpunkten zu übertragen sind, und die einer Transformation durch mehrere Verarbeitungsfunktionen über einer Kanalcodierung auf der physikalischen Schicht unterzogen werden, die Eingangspakete nehmen und Ausgangspakete erzeugen, wobei jedes der Ausgangsdatenpakete eine eindeutige Wichtigkeit, Signifikanz oder Bedeutung hinsichtlich des Beitrags zur Wiederherstellung der zu übertragenden Informationen oder der Qualität der Benutzererfahrung aufweist, wobei nicht alle Ausgangspakete am Empfänger für eine erfolgreiche Wiederherstellung der Eingangspakete oder eine gezielte Qualität der Erfahrung erforderlich sind.

NC wird als eine Verarbeitungsfunktion auf Paketebene oder insbesondere eine Paketcodierungsfunktion verwendet, die Eingangspakete, die auch als Quellpakete oder Service Data Units (SDU) oder NC SDUs bezeichnet werden, in Ausgangspakete umwandelt, die auch als codierte Pakete oder Protokolldateneinheiten (Protocol Data Units (PDU)) oder NC PDUs bezeichnet werden. Die Eingangspakete, die zusammen codiert werden, bilden eine NC-Generation, die auch als eine Generation bezeichnet wird. Ein NC PDU-Ausgangspaket der Netzwerkcodierungsverarbeitung ist eine lineare Kombination auf einer Symbolebene einer oder mehrerer der NC SDUs, d. h. eine erste NC PDU wird basierend auf einer linearen Kombination einer oder mehrerer der NC SDUs unter Verwendung eines ersten Satzes von Netzwerkcodierungskoeffizienten erzeugt, und eine zweite NC PDU wird basierend auf einer zweiten linearen Kombination einer oder mehrerer der NC SDUs unter Verwendung eines zweiten Satzes von Netzwerkcodierungskoeffizienten erzeugt, der von dem ersten Satz von Netzwerkcodierungskoeffizienten unabhängig ist, d. h. die erste NC PDU und die zweite NC PDU sind linear unabhängig.

Um n NC SDUs am Empfänger erfolgreich wiederherzustellen, muss der Empfänger zumindest n linear unabhängige NC PDUs aus den übertragenen NC PDUs korrekt decodieren. Daher kann der Empfänger, selbst wenn der Empfänger einige der empfangenen NC PDUs nicht korrekt decodiert, die NC SDUs immer noch wiederherstellen. Wie bereits erwähnt, wird Netzwerkcodierung verwendet, um Paketcodierungstechniken zu beschreiben, wobei Codierung
a) Ende-zu-Ende-Codierung sein kann, wo Codierung an der Quelle (d. h. Ursprungsknoten des Pakets) durchgeführt wird, Decodierung am Ziel durchgeführt wird. Es gibt keine Aufzeichnung oder Neucodierung an irgendeinem Zwischenknoten. Durch Erzeugen von mehr linear unabhängigen NC PDUs als die Anzahl von NC SDUs einer Generation führt dies zu einer Redundanz von Paketen, d. h. einige der NC PDU-Übertragungen können fehlschlagen, solange genug NC PDUs empfangen werden, um die NC SDUs vollständig zu decodieren. NC PDUs können auch über mehrere Pfade verteilt sein.
b) Codierung wird am Quell- und/oder Zwischenweiterleitungsknoten durchgeführt, und Decodierung wird am Ziel durchgeführt. Weiterleitung von codierten / neucodierten NC PDUs ermöglicht eine Kooperation von SubNetzknoten und wird als Network Coded Cooperation (NCC) bezeichnet.

Vorläufige Überlegungen für NCC: Subnetzwerk und Modellierung des Ansatzes in einem Netzwerksimulator. Die Kommunikationsparameter für den industriellen Anwendungsfall wurden spezifiziert. Verschiedene Netzwerktopologien wurden modelliert, und verschiedene Fehlersteuerungsmechanismen wurden auf dieser Basis simuliert. Die Simulationsläufe erzeugten KPIs zur Bewertung der Fehlersteuerungsprozeduren in Bezug auf Ressourcenbedarf und Zuverlässigkeit.

Verschiedene Kooperations- und Codierstrategien wurden für NCC entwickelt und mit einfachen Übertragungsverfahren wie Einzelübertragung oder statischer Paketneuübertragung (so genannte blinde Neuübertragung) verglichen.

### Szenario

Der Fokus liegt auf industriellen Anwendungsfällen, mit den spezifischen Szenarien Robotersteuerung, Einheitstest und - in begrenztem Umfang aufgrund der in der Simulation angenommenen begrenzten Datenrate - Sichtprüfung. Die Überlegungen können auf andere Anwendungsfälle mit ähnlichen Anforderungen und Annahmen übertragen werden, wie z. B. Automotive.

Lösungen für die herausfordernden Anforderungen dieses Anwendungsfalls aus D2.2 wurden wie folgt umgesetzt:
Vergleich der Anforderungen mit der Umsetzung in Netzwerksimulation

| **Anforderungen aus D2.2** | **Konfiguration der in der Simulation verwendeten Kommunikationsparameter** |
|---|---|
| Zykluszeit < 100 µs - 1 ms für Kommunikation in Schleifen andere Kommunikationszyklen < 10 - 100 ms | Die Zykluszeit beträgt 250 µs, was einer TDMA-Rahmendauer von 250 µs entspricht, die 26 Zeitschlitze umfasst. |
| | Eine symmetrische bidirektionale Kommunikation zwischen HC und SNEs wird angenommen. |
| | Datenpakete sollten innerhalb eines Einzelrahmens geliefert werden (deterministische Zykluszeit!) |
| | **Dies macht den Ansatz um einen Faktor von mindestens 10 schneller im Vergleich zu 5G URLLC!** |
| Datenpaketgröße 100..300 Byte | 28 Byte höherer Schichtdaten |
| | Die Datenpaketgröße könnte durch Verwendung von Fragmentierungs- oder höheren Modulationsschemata erweitert werden, aber es wurde als ausreichend angesehen, die Fehlersteuerungsmechanismen zu bewerten. |
| Datenrate 1..2 Mbit/s (im Fall von Video bis zu 80 Mbps) | Mit der gewählten Datenpaketgröße beträgt die resultierende Datenrate für höhere Schichtdaten 896 kbit/s. |
| 20..50 SNE | Vordefinierter und stationärer Satz von bis zu 6 SNE Die Anzahl von 6 SNE ist ausreichend, um NCC-Strategien zu bewerten. Mehr SNE kann abhängig von den verfügbaren Ressourcen unterstützt werden. |
| Bewegungsgeschwindigkeit von Knoten keine oder bis zu 20 m/s | Wie wir auf einer Paketebene simulieren, ist die Bewegungsgeschwindigkeit nicht relevant. Sich ändernde Übertragungsbedingungen basierend auf Topologie und Entfernungen wurden durch eine periodische Permutation aller SNEs simuliert. Insbesondere erlaubt dies, alle möglichen Kooperationsbeziehungen zwischen den SNEs zu untersuchen. |
| Keine Anforderung definiert | Multilink-Betrieb: zwei parallele Links/Verbindungen zwischen Geräten (Betrieb auf dem zweiten Kanal ist synchron zum ersten Kanal (gleicher Schlitz und Rahmenausrichtung)) |
| | Dieser Betriebsmodus erlaubt kürzere Übertragungsphasen und somit bessere NCC-Strategien. |
| Keine Anforderung definiert | Sterntopologie: keine Verbindung auf Anwendungsebene zwischen SNEs, nur zwischen HC und SNEs |
| Wahrscheinlichkeit, zwei aufeinanderfolgende Fehler zu haben< 10⁻⁶ | Diese gegebene Anforderung scheint für schnelle industrielle Steuerungsanwendungen zu schwach zu sein, da 2 aufeinanderfolgende Fehler zu einem Fehlerzustand führen. Bei einer gegebenen Zykluszeit von 250 µs würde eine Wahrscheinlichkeit von 10⁻⁶ statistisch alle 250 Sekunden zu einem Fehlerzustand führen! |
| | Es wird empfohlen, als Wahrscheinlichkeit, zwei aufeinanderfolgende Fehler zu haben, mindestens < 10⁻⁹ zu betrachten, was 3,2*10⁻⁵ für einen einzelnen Paketverlust bei unkorrelierten Paketfehlern bedeutet. |
| | **Das Paketverlustergebnis ist ein KPI, der das Ergebnis der Simulationen sein wird.** |

Das industrielle Subnetzwerk besteht aus einem HC und 6 zufällig angeordneten SNEs. Alle SNE befinden sich innerhalb des Abdeckungsbereichs des HC, aber die unterschiedlichen Entfernungen zwischen HC und SNE führen zu unterschiedlichen Verbindungseigenschaften zwischen HC und SNE. Zusätzlich zu der HC-SNE-Verbindung sind die SNEₓ-SNE_{y}-Verbindungseigenschaften besonders wichtig für NCC, da die kooperative Kommunikation auf der Weiterleitung von Paketen über andere SNEs basiert.

Um schwierige Übertragungsbedingungen zu simulieren, wie sie in einer Roboterzelle auftreten, können der Umgebung 2 Hindernisse hinzugefügt werden, die die Sichtlinie zwischen HC und SNE oder zwischen SNEₓ und SNE_{y} behindern können (Fig. 8). Für eine vollständige Bewertung und die Erzeugung von statistischen KPIs wurden alle möglichen Kooperationsbeziehungen zwischen den SNEs durch eine periodische Permutation aller SNE-Positionen simuliert.

Basierend auf dieser Netzwerkkonstellation untersuchten wir, wie die räumliche Diversität über die PHY-Multilinks und über andere Subnetzgeräte in Reichweite durch Verwendung von netzwerkcodierten kooperativen Mechanismen die Zuverlässigkeit verbessert.

Die zentralen Fragen waren:
- Welche Knoten können und sollten abhängig von Entfernung/Verbindungsqualität kooperieren?
- Welchen Einfluss haben Hindernisse auf die Übertragungsqualität im Netzwerk?
- Wie können Kooperationsstrategien während des Betriebs angepasst werden, insbesondere innerhalb der Zykluszeit?

Es wird angenommen, dass pro Zyklus ein natives Paket vom HC zu einem SNE und ein natives Paket von einem SNE zum HC übertragen wird (Time Division Duplex TDD). Ein Paket wird innerhalb eines bestimmten Zeitschlitzes auf einem bestimmten Frequenzkanal übertragen, der als Ressourcenblock (RB) bezeichnet wird.

Die Ressourcenzuweisung aus Fig. 2c. dient als eine Basislinie (entspricht Konzept zur blind Retransmission).

In einer Downlink-Phase wird beispielsweise ein Paket "A" vom HC zum SNE₁ übertragen (hier in Slot 0 gezeigt), das in einer Uplink-Phase ein Paket "a" zurücksendet (Slot 4). Im Fall einer Einzelübertragung vervollständigt dies den Kommunikationszyklus. Im Fall einer blinden Neuübertragung werden die Pakete wiederholt gesendet (Slot 10 und Slot 14).

Bei gegebenen Annahmen für Übertragungsleistung, Frequenzband, Modulationsbandbreite und Empfindlichkeit werden die Basislinienergebnisse aus Fig. 12b erhalten.

Die gemachten Annahmen zeigen, dass eine einfache Übertragung insgesamt nicht ausreichend statistisch zuverlässig wäre. Aber bereits eine einfache blinde Neuübertragung würde ausreichen, um unter Sichtlinienbedingungen eine ausreichend zuverlässige Übertragung zu erzeugen.

In der Praxis treten Probleme unter solchen idealen Sichtlinienbedingungen nicht oder selten auf, sondern treten in Situationen auf, in denen die direkte Kommunikation durch Hindernisse gestört wird. Die Werte aus Fig. 12c ergeben sich bei 2 Hindernissen.

Im Falle von Hindernissen schlägt die direkte Übertragung zwischen dem HC und dem SNE hinter einem Hindernis fehl.

### Network Coded Cooperation NCC-Strategien

Die kooperative Kommunikation basiert auf der Fähigkeit von SNEs, Pakete im Auftrag anderer SNEs oder HC weiterzuleiten. Dies führt zu zusätzlichen Ausbreitungspfaden, die die Diversitätsreihenfolge der Kommunikation erhöhen. Dies bedeutet, dass blockierte direkte Verbindungen kompensiert werden können.

NCC erweitert kooperative Kommunikationen mit der Option, mehrere native Pakete zusammen als ein einzelnes codiertes Paket weiterzuleiten, indem sie auf Symbolebene hinzugefügt werden.

Die folgende Planung gemäß Fig. 7a wurde verwendet, um eine NCC-Strategie innerhalb eines Kommunikationszyklus zu verarbeiten:
- Downlink-Phase, in der der HC native Pakete einmal an alle SNEs sendet (Slot 0 bis Slot 2 in Fig. 7a)
- Uplink-Phase, in der jedes SNE native Pakete an den HC sendet (Slot 5 bis Slot 7 in Fig. 7a)
- NCC-Phase, in der jedes SNE-Pakete für andere SNEs weiterleitet, wobei Downlink- und Uplink-Pakete zusammen als ein codiertes Paket codiert werden. Die Zusammensetzung des codierten Pakets wird beschrieben und über einen Codierungsvektor signalisiert. (Slot 10 bis Slot 12 in Fig. 7a)
- Optionale weitere NCC-Phasen mit anderen Codierungsvektoren.

Codierte Pakete haben die gleiche Nutzlastlänge wie die nativen Pakete, aus denen dieselben codiert werden. Dies bedeutet, dass die Übertragung des codierten Pakets die gleiche Slotgröße mit der gleichen Datenrate wie die Übertragung des nativen Pakets erfordert. Dies führt zu einer signifikanten Erhöhung der Effizienz im Vergleich zu kooperativer Kommunikation, bei der alle nativen Pakete einzeln wiederholt werden müssen.

Planungs- und Codierstrategien für NCC:

| Strategie | Beschreibung |
|---|---|
| NCC 1 | Alle SNEs empfangen alle Pakete in der Downlink-Phase des HC (Slots 0-2) und in der Uplink-Phase (Slots 5-7) der anderen SNEs durch sogenanntes Überhören. |
| Jeder hilft jedem (max. Codiergrad = 2) | |
| | In einer ersten NCC-Phase senden SNEs jeweils die Downlink- und Uplink-Pakete des SNE mit der nächsthöchsten SNE-ID in codierter Form. In einer zweiten NCC-Phase werden die Pakete des SNE mit der übernächsten SNE-ID weitergeleitet und so weiter. |
| | Auf diese Weise leitet jedes SNE die Pakete für alle anderen SNEs weiter. |
| | Jedes SNE erzeugt ein codiertes Paket der Stufe 2 aus den nativen Downlink- und Uplink-Paketen. Wenn nur ein natives Paket zur Codierung zur Verfügung steht, wird dieses nativ weitergeleitet. Wenn beide nativen Pakete fehlen, wird kein Paket gesendet. |
| | Diese Prozedur hat das größte Potenzial für gegenseitige Unterstützung, erfordert jedoch die meisten Ressourcenblöcke aller NCC-Prozeduren. |
| | Mit 6 SNEs wären 6 Downlink-RBs + 6 Uplink-RBs + 5*6 NCC-RBs = 42 RBs erforderlich! Unter Berücksichtigung von Verarbeitungslatenzen können nur maximal 3 NCC-Phasen in der gewählten Rahmenlänge von 26 Slots abgebildet werden, was zu einer Anzahl von 30 RBs führt. |
| | Darüber hinaus ist der Überhöraufwand eines SNE sehr hoch, d. h. ein SNE erfordert viele RX-Slot-Aktivitäten. |
| NCC 2 | Die Anzahl der benötigten RBs und RX-Slot-Aktivitäten kann durch Bildung von Clustern drastisch reduziert werden. In diesem Fall bilden 3 SNEs ein Cluster. Innerhalb des Clusters unterstützt jedes SNE die anderen zwei SNEs in 2 NCC-Phasen. |
| 2 Cluster von 3 kooperierenden SNE (1-2-3, 4-5-6) | |
| | Mit 6 SNEs und 2 Clustern werden 24 RBs benötigt, was der Anzahl der blinden Neuübertragungen entspricht. |

Unter Sichtlinienbedingungen (Fig. 12d) erwiesen sich NCC-Verfahren als geeignet, obwohl es für kleinere Clustergrößen Topologiepermutationen gibt, bei denen die SNEs des Clusters eine ungünstige Konstellation aufweisen, was die Kooperation erschwert.

Im nächsten Schritt wurden schwierigere Bedingungen untersucht, bei denen 2 Hindernisse die Ausbreitung zu einigen SNE blockieren (Fig. 12e).

Selbst wenn die durchschnittlichen Paketverlustraten aller Permutationen nicht die gewünschten 10⁻⁵ erreichen, zeigen die Ergebnisse deutlich das Potenzial von NCC, die Zuverlässigkeit des Netzwerks zu erhöhen. Dies gilt insbesondere bei gut gewählten Kooperations-Clustern. Es ist offensichtlich, dass selbst durch Hindernisse blockierte Verbindungen aufgrund der zusätzlichen Pfaddiversität von NCC vollständig aufrechterhalten werden können.

Jede NCC-Phase erhöht die Anzahl von RBs sowie die Anzahl von TX- und RX-Slot-Aktivitäten. Clustering kann die Anzahl von RBs und die Anzahl von TX- und RX-Slot-Aktivitäten reduzieren.

Kleinere Cluster bedeuten jedoch eine Erhöhung der Paketverlustrate aufgrund der kleineren Anzahl von Kooperationspartnern. Wenn das Cluster falsch gewählt wird und es Hindernisse zwischen den SNEs in dem Cluster gibt, kann auch NCC ausfallen.

### Vorgeschlagene opportunistische Network Coded Cooperation

Bisher wurden Verfahren untersucht, bei denen die kooperierenden SNEs und somit die Codierungsvektoren der NCC-Phasen statisch vordefiniert wurden.

NCC kann noch effizienter werden, wenn Feedback über den Downlink-Empfang mit dem Uplink-Paket bereitgestellt wird. Beispielsweise kann das Uplink-Paket mit dem Downlink-Paket codiert werden. Hier entspricht die Slotbelegung der aus Fig. 7b.

Ein SNE kann die codierten Pakete, die in der Uplink-Phase empfangen werden, über Überhören analysieren und ableiten, welches SNE in demselben Cluster die meiste Unterstützung benötigt. Um das in der Analyse bestimmte SNE zu unterstützen, wird der Codierungsvektor für die NCC-Phase dynamisch angepasst. Diese Entscheidung wird dezentral im SNE getroffen und erfordert keine Interaktion mit dem HC. Die grundlegende Planung im Rahmen bleibt auch dieselbe. Alle Zykluszeitanforderungen sind erfüllt, da die dynamische, flexible Unterstützung im selben Rahmen stattfindet.

| Strategie | Beschreibung |
|---|---|
| NCC 3 | Es ist nur eine NCC-Phase definiert, in der ein SNE selbst bestimmt, welches andere SNE-Hilfe benötigt (Slotbelegung entspricht Fig. 7b). |
| Kein Cluster mit dynamischen Codierungsvektoren | |
| | Mit 6 SNEs und keinen Clustern werden nur 18 RBs benötigt, was im Vergleich zur Anzahl der blinden Neuübertragungen viel geringer ist. |
| NCC 4 | Wiederum bilden 3 SNEs ein Cluster. Es ist nur eine NCC-Phase definiert, in der ein SNE selbst bestimmt, welches andere SNE innerhalb desselben Clusters Hilfe benötigt (Slotbelegung entspricht Fig. 10b). |
| 2 Cluster von 3 kooperierenden SNE (1-2-3, 4-5-6) mit dynamischen Codierungsvektoren | |
| | Mit 6 SNEs und 2 Clustern werden auch nur 18 RBs benötigt, was im Vergleich zur Anzahl der blinden Neuübertragungen viel geringer ist. |
| NCC 5 | Mit 2 kooperierenden SNEs wurde auch die kleinstmögliche Clustergröße untersucht. Slotbelegung entspricht Fig. 11. Dies führt bei dem Beispiel zu 3 Clustern. Mit 18 RBs, 2 TX-Aktivitäten und 4 RX-Aktivitäten wird der minimale Ressourcenbedarf erreicht. |
| 3 Cluster von 2 kooperierenden SNE (1-5), (3-4), (2-6) mit dynamischen Codierungsvektoren | |

Ergebnisse sind in Fig. 12f dargestellt.

Dynamische Anpassung des Codierungsvektors durch Analysieren und Bewerten der tatsächlichen Topologie reduziert die Paketverlustrate um einen Faktor von über 1000. Während ein Netzwerk, das mit Neuübertragung arbeitet, vollständig ausgefallene Verbindungen und eine durchschnittliche Paketverlustrate von 33% hat, kann ein Netzwerk, das mit NCC arbeitet, den vollen Betrieb aufrechterhalten.

Gleichzeitig kann die Anzahl von RBs um 25% reduziert werden! Die freigegebenen RBs können entweder für weitere Redundanz in dem Netzwerk (z. B. 2. NCC-Phase) oder für zusätzliche SNEs verwendet werden.

### Zusammenfassung und Empfehlungen

Network Coded Cooperation zeigt hervorragende Ergebnisse in 6G-Subnetzwerken, um die Verfügbarkeit von SNEs und die Zuverlässigkeit der Übertragung zu erhöhen. NCC kann auch in TDMA/TDD-Systemen mit extrem kurzen Zykluszeiten verwendet werden.

Die richtige Auswahl von kooperierenden SNEs in einem Kooperations-Cluster ist wichtig. Je größer die Cluster gewählt werden, desto mehr Redundanz ist in dem Netzwerk verfügbar und somit die Möglichkeit, die Paketverlustrate zu reduzieren. Andererseits erhöhen größere Cluster den Ressourcenbedarf.

Mit opportunistischer Network Coded Cooperation wurde ein neues Verfahren untersucht, bei dem eine Bewertung der Verbindungsqualität in dem SNE durchgeführt wird, um zu identifizieren, welchem anderen SNE in der NCC-Phase geholfen werden kann/sollte.

Das vorgestellte Verfahren
- arbeitet mit Zykluszeiten von 250 µs und ist daher etwa 10-mal schneller als 5G-URLLC-Systeme,
- reduziert die Paketverlustrate um einen Faktor von 1000 im Vergleich zu Systemen mit Paketneuübertragung,
- benötigt 25% weniger Ressourcenblöcke für die Übertragung im Vergleich zu Systemen mit Paketneuübertragung.

Es wird daher dringend empfohlen, opportunistische Network Coded Cooperation in zukünftige 6G-Subnetzwerke einzubeziehen und die Bedingungen für das Überhören in Kooperations-Clustern zu schaffen.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle der Verfahrensschritte können durch einen Hardware-Apparat (oder unter Verwendung eine Hardware-Apparats), wie zum Beispiel einen Mikroprozessor, einen programmierbaren Computer oder eine elektronische Schaltung. Bei einigen Ausführungsbeispielen können einige oder mehrere der wichtigsten Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist. Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vorrichtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Netzknoten, insbesondere eine Subnetzeinheit (SNE), mit einem Transceiver, der ausgebildet ist:
erste Downlinkdaten (A) in einem oder mehreren ersten Zeitschlitzen zu empfangen; und
erste Uplinkdaten (a) in einem oder mehreren zweiten Zeitschlitzen zu senden;
wobei die ersten Uplinkdaten als codierte Daten (A+a) gesendet werden, die mit den ersten Downlinkdaten (A) codiert sind, oder als erweiterte Daten (a mit A') umfassend die ersten Uplinkdaten (a) sowie eine von den ersten Downlinkdaten abgeleiteten Information (A') gesendet werden.

2. Netzknoten gemäß einem der vorherigen Ansprüche, wobei nur die ersten Uplinkdaten (a) als uncodierte Daten anstatt der codierten Daten (A+a) oder anstatt der erweiterten Daten (a mit A') gesendet werden, wenn keine ersten Downlinkdaten (A) empfangen wurden (z.B. gestörter Fall).

3. Netzknoten gemäß einem der vorherigen Ansprüche, wobei ein Codiervektor der gesendeten uncodierten Daten oder codierten Daten (A+a) oder erweiterten Daten (a mit A') Auskunft über die Zusammensetzung des gesendeten Inhalts gibt.
Ausführungsbeispiel mit Fokus auf Erkennung der Störung

4. Netzknoten gemäß Anspruch 1, 2 oder 3, wobei der Transceiver ausgebildet ist, das Vorliegen des gestörten Falls, insbesondere eines weiteren Netzknotens, anhand des Empfangs der zweiten Uplinkdaten (b) ohne die zweiten Downlinkdaten (B) oder anhand der erweiterten Daten (B') zu erkennen; und/oder
wobei der Transceiver ausgebildet ist, anhand der codierten Daten, insbesondere der codierten zweiten Uplinkdaten und/oder zweiten Downlinkdaten, im zweiten Zeitschlitz, z.B. basierend auf Codiervektor, oder anhand einer abgeleiteten Information (B'), insbesondere einer aus den zweiten Downlinkdaten (B) abgeleiteten Information (B'), zu erkennen, ob und/oder wie gut der Netzknoten die Basisstation empfangen hat und/oder wie gut der weitere Netzknoten empfangen werden konnte.
Ausführungsbeispiel mit Fokus auf Anpassung der Daten für dritte Zeitschlitze

5. Netzknoten gemäß Anspruch 2, 3 oder 4, wobei der Transceiver ausgebildet ist, bei Vorliegen des gestörten Falls in einem oder mehreren dritten Zeitschlitzen die zweiten Uplinkdaten und/oder die zweiten Downlinkdaten oder Daten, die die zweiten Uplinkdaten codiert mit den zweiten Downlinkdaten enthalten, zu versenden.
Ausführungsbeispiel "Mithören" in ersten/zweiten Zeitschlitzen

6. Netzknoten gemäß einem der Ansprüche 2 bis 5, wobei der Transceiver ausgebildet ist, um mitzuhören, um in einem oder mehreren ersten Zeitschlitzen die zweiten Downlinkdaten, beispielsweise von einer Basisstation, zu empfangen; und/oder
wobei der Transceiver ausgebildet ist, um mitzuhören, um in einem oder mehreren zweiten Zeitschlitzen die zweiten Uplinkdaten, beispielsweise von einem weiteren Netzknoten, zu empfangen; und/oder
wobei der Transceiver ausgebildet ist, in einem oder mehreren zweiten Zeitschlitzen Daten, beispielsweise von einem oder mehreren weiteren Netzknoten, zu empfangen, die entweder in einem nicht gestörten Fall codierte Daten (B+b, etc.) mit zweiten Uplinkdaten und zweiten Downlinkdaten oder erweiterten Daten (b mit B', etc.) enthalten oder die in einem gestörten Fall nur zweite Uplinkdaten (b, etc. ) enthalten.
Ausführungsbeispiel weitere Netzknoten / Netzwerk

7. Netzknoten gemäß einem der vorherigen Ansprüche, wobei der Netzknoten in einem Netzwerk oder Subnetzwerk, das weitere Netzknoten und eine Basisstation umfasst, kommuniziert; und/oder
wobei die codierten Daten an die weiteren Netzknoten oder die Basisstation in ein oder mehreren zweiten Zeitschlitzen gesendet werden, um einen Uplink an die Basisstation durchzuführen und den anderen Netzknoten zu signalisieren, dass eine Weiterleitung benötigt ist, und/oder
wobei zweite Uplinkdaten und zweite Downlinkdaten oder Daten, die die zweiten Uplinkdaten codiert mit den zweiten Downlinkdaten enthalten, in ein oder mehreren dritten Zeitschlitzen an weitere Netzknoten gesendet werden, um eine Weiterleitung zu ermöglichen.
Ausführungsbeispiel ohne Anpassung der Daten für dritte Zeitschlitze

8. Netzknoten gemäß einem der vorherigen Ansprüche, wobei der Transceiver ausgebildet ist, in einem oder mehreren dritten Zeitschlitzen Uplinkdaten und Downlinkdaten gemäß vordefinierter Konfiguration (Codier-Vorschrift) in einem nicht gestörten Fall zu versenden; und/oder
wobei der Transceiver ausgebildet ist, Uplinkdaten und Downlinkdaten, insbesondere die zweiten Uplinkdaten und die zweiten Downlinkdaten, gemäß vordefinierter Konfiguration (Codiervektor) in einem oder mehreren dritten Zeitschlitzen als codierte Daten zu versenden.
Ausführungsbeispiel mit Anpassung der Daten für dritte Zeitschlitze

9. Netzknoten gemäß Anspruch 8, wobei der Transceiver ausgebildet ist, einen Hilfebedarf für den weiteren Netzknoten oder die Basisstation zu bestimmen und/oder einen Parameter, der den Hilfebedarf anzeigt, auszugeben; und/oder
wobei der Transceiver ausgebildet ist, eine Priorität des Hilfebedarf von weiteren Netzknoten (z.B. abhängig von der Entfernung) zu bestimmen und/oder eine Liste anderer Netzknoten mit Bewertung derer Empfangsverhältnisse und Erreichbarkeit zu ermitteln; und/oder
wobei der Transceiver ausgebildet ist, die Zusammensetzung (z.B. C+c oder B+b ...) der in den einem oder den mehreren dritten Zeitschlitzen zu versendenden Daten je nach Hilfebedarf eines anderen Netzknotens und/oder (d.h.) abhängig von dem Vorliegen eines erkannten nicht gestörten Falls eines anderen Netzknotens oder gestörten Falls eines anderen Netzknotens anzupassen.
Weitere Ausführungsbeispiele

10. Netzknoten gemäß einem der vorherigen Ansprüche, wobei die abgeleitete Information (A') oder ein Codiervektor der codierten Daten (A+a) Auskunft über den erfolgreichen Empfang der ersten Daten gibt und/oder über die Qualität des Empfangs der ersten Downlinkdaten (A) gibt; und/oder
wobei ein Parameter, der von Qualität des Empfangs der ersten Downlinkdaten (A) abhängt, als Gewichtungsfakor (K) für die codierten Daten (KxA+a) oder Teil der abgeleiteten Information (A') ist.

11. Netzknoten gemäß einem der vorherigen Ansprüche, wobei die ein oder mehreren ersten Zeitschlitze und die ein oder mehreren zweiten Zeitschlitze oder die ein oder mehreren ersten Zeitschlitze, die ein oder mehreren zweiten Zeitschlitze und die ein oder mehreren dritten Zeitschlitze in einem gemeinsamen Frame oder mehreren aufeinanderfolgenden Frames angeordnet sind (z.B. 3GPP 5G/6G, ETSI DECT NR+); und/oder
wobei die ein oder mehreren ersten Zeitschlitze und die ein oder mehreren zweiten Zeitschlitze oder die ein oder mehreren ersten Zeitschlitze, die ein oder mehreren zweiten Zeitschlitze und die ein oder mehreren dritten Zeitschlitze gemäß einer definierten Reihenfolge angeordnet sind (z.B. WiFi).
Ausführungsbeispiel Clusterung

12. Netzknoten gemäß einem der vorherigen Ansprüche, wobei der Transceiver ausgebildet ist, in einem jeweiligen ersten und/oder in einem jeweiligen zweiten und/oder in einem jeweiligen dritten Zeitschlitz nur dann mitzuhören, wenn in diesem jeweiligen ersten oder jeweiligen zweiten oder jeweiligen dritten Zeitschlitz der Empfang von Daten oder von codierten Daten von weiteren Netzknoten oder einer Basisstation für einen weiteren Netzknoten zu erwarten ist, die zusammen mit dem Netzknoten einem definierten Cluster zugeordnet sind; oder
wobei der Transceiver ausgebildet ist, in einem jeweiligen ersten und/oder in einem jeweiligen zweiten und/oder in einem jeweiligen dritten Zeitschlitz nur dann mitzuhören, wenn in diesem jeweiligen ersten oder jeweiligen zweiten oder jeweiligen dritten Zeitschlitz der Empfang von Daten oder von codierten Daten von weiteren Netzknoten oder einer Basisstation für einen weiteren Netzknoten zu erwarten ist, die zusammen mit dem Netzknoten einem definierten Cluster zugeordnet sind, wobei eine Konfiguration jeweils erste Zeitschlitze und/oder jeweils zweite Zeitschlitze und jeweils dritte Zeitschlitze einzelnen Netzknoten zuordnet und wobei für den Netzknoten anhand der Konfiguration eine Erwartung für den Empfang ableitbar ist.

13. Netzknoten gemäß Anspruch 12, wobei der Netzknoten anhand einer Clusterkonfiguration und/oder einem Clusterlevel mit unterschiedlichen Clusterkonfigurationen die weiteren Netzknoten im definierten Cluster kennt oder Kenntnis über Zuordnung der jeweiligen Zeitschlitz zu den jeweiligen Clustern hat; und/oder
wobei eine Konfiguration mehrere Netzknoten in einem Netzwerk oder Subnetze zu einem Cluster clustert oder jeweilige Zeitschlitz zu den jeweiligen Clustern zuordnet oder wobei eine weitere Einheit, insbesondere eine Basisstation, mehrere Netzknoten zu einem Cluster oder zu mehreren Clustern mit unterschiedlicher Größe für unterschiedliche Clusterlevel clustert.
Ausführungsbeispiel dynamische Clusterung

14. Netzknoten gemäß einem der Ansprüche 13, wobei innerhalb eines Netzwerks oder Subnetzes Cluster gemäß einer dynamischen Clusterung mit unterschiedlichen Clusterkonfigurationen und unterschiedlichen Clusterleveln vorgesehen sind, insbesondere wobei sich je nach Clusterlevel die Anzahl der geclusterten Netzknoten variiert; und/oder
wobei der Transceiver ausgebildet ist, ein Clusterlevel anzupassen oder auszuwählen in Abhängigkeit von einem Erkennen von einem oder mehreren nicht gestörten Fällen oder einem oder mehreren gestörten Fällen.

15. Netzknoten gemäß einem der Ansprüche 12 bis 14, wobei eine Zugehörigkeit der Netzknoten zu einem oder mehreren Clustern abhängig von einer Auswertung von einem oder mehreren gestörten Fällen oder einem oder mehreren nicht gestörten Fällen und/oder einer Auswertung von Empfangsqualitätsinformationen definiert wird; oder
wobei eine Zugehörigkeit der Netzknoten zu einem oder mehreren Clustern abhängig von einer Auswertung von einem oder mehreren gestörten Fällen oder einem oder mehreren nicht gestörten Fällen und/oder einer Auswertung von Signalstärken definiert wird, wobei die Clusterkonfiguration durch eine Basisstation erfolgt.
Ausführungsbeispiele weitere Netzknoten

16. Weiterer Netzknoten, insbesondere eine Subnetzeinheit (SNE), mit einem Transceiver, der ausgebildet ist,
erste Downlinkdaten und erste Uplinkdaten in einem oder mehreren ersten Zeitschlitzen zu empfangen; und
codierte Daten, die die ersten Uplinkdaten codiert mit den ersten Downlinkdaten oder codiert mit einer von den ersten Downlinkdaten abgeleiteten Information codiert sind in einem oder mehreren zweiten Zeitschlitzen zu empfangen; und
erste Downlinkdaten und erste Uplinkdaten in einem oder mehreren dritten Zeitschlitzen zu senden, wenn anhand der in dem einen oder mehreren zweiten Zeitschlitzen empfangenen Daten ein gestörter Fall identifiziert wurde.

17. Netzknoten, insbesondere eine Subnetzeinheit (SNE), mit einem Transceiver, der ausgebildet ist:
erste Uplinkdaten (a) in einem oder mehreren ersten Zeitschlitzen zu senden; und
erste Downlinkdaten (A) in einem oder mehreren zweiten Zeitschlitzen zu empfangen;
wobei die ersten Downlinkdaten als codierte Daten (A+a) gesendet werden, die mit den ersten Uplinkdaten (a) codiert sind, oder als erweiterte Daten umfassend die ersten Downlinkdaten (A) sowie eine von den ersten Uplinkdaten abgeleiteten Information (a') gesendet werden.
Ausführungsbeispiel Verfahren/Computerprogramm

18. Verfahren zum Betreiben eines Netzknotens, mit folgenden Schritten:
Empfangen von ersten Downlinkdaten in einem oder mehreren ersten Zeitschlitzen; und
Senden von erste Uplinkdaten in einem oder mehreren zweiten Zeitschlitzen;
wobei die ersten Uplinkdaten als codierte Daten (A+a) gesendet werden, die mit den ersten Downlinkdaten (A) codiert sind, oder als erweiterte Daten umfassend die ersten Uplinkdaten (a) sowie eine von den ersten Downlinkdaten abgeleiteten Information (A') gesendet werden.

19. Computerprogramm mit einem Programmcode zur Durchführung des Verfahrens nach Anspruch 18, wenn der Programmcode auf einem Transceiver ausgeführt wird.
